(19) Europäisches Patentamt

European Patent Office

Office européen des brevets

(11) Veröffentlichungsnummer: **0 231 465**
**A2**

(12) **EUROPÄISCHE PATENTANMELDUNG**

(21) Anmeldenummer: 86116394.7

(22) Anmeldetag: 26.11.86

(51) Int. Cl.³: **F 16 D 25/14**

(30) Priorität: 03.01.86 DE 3600047

(43) Veröffentlichungstag der Anmeldung:
12.08.87 Patentblatt 87/33

(84) Benannte Vertragsstaaten:
AT DE FR GB SE

(71) Anmelder: ROBERT BOSCH GMBH
Postfach 50
D-7000 Stuttgart 1(DE)

(72) Erfinder: Bertling, Hannes, Dr.Dipl.-Ing.
Alter Postweg 37
D-7143 Vaihingen/Enz(DE)

(72) Erfinder: Jonner, Wolf-Dieter, Ing.grad.
Burgunderstrasse 25
D-7141 Beilstein(DE)

(72) Erfinder: Mergenthaler, Robert
Geranienweg 17
D-7145 Markgröningen(DE)

(72) Erfinder: Siegel, Heinz, Ing.grad.
Hohenloher Strasse 86
D-7000 Stuttgart 40(DE)

(72) Erfinder: Zechmann, Jürgen, Dipl.-Ing.
Max-Planck-Strasse 10/1
D-7100 Heilbronn(DE)

(54) **Vorrichtung bei mit einem Blockierschutzsystem (ABS) ausgerüsteten Kraftfahrzeugen.**

㊼ Bei einer Vorrichtung bei mit einem Blockierschutzsystem (ABS) ausgerüsteten Kraftfahrzeugen o. dgl., bei denen beim Abbremsen über die Betriebsbremse und/oder durch Einsetzen von Motorbremsmoment im ABS-Fall ein automatisches Auskuppeln durch Ansteuerung eines ein Zylinder/Kolbenaggregat beaufschlagenden Mehrwege-Magnetventils durch die ABS-Funktionen erfolgt und Mittel vorgesehen sind, die eine Übernahme der Kupplungsfunktion (Einkuppeln) bei einer willkürlichen (manuellen) Kupplungsbetätigung durch die Bedienungsperson ermöglichen, wird vorgeschlagen, das in einer ersten Bauform als separates Zwischenbauteil ausgebildete Kolben/Zylinderaggregat ausschließlich unter Wegfall von Magnetventilen durch hydraulische Verbindungsleitungen mit Kupplungsgeber- oder -nehmerzylinder zu verbinden (keine parallelen Umgehungsleitungen) und dabei gegebenenfalls bei weiteren Bauformen das Zylinder/Kolbenaggregat baulich mit dem Kupplungsnehmerzylinder oder mit dem -geberzylinder zu vereinigen.

EP 0 231 465 A2

./...

Fig.1

R. 20361

1931/ot/wi    Spalding
28.11.85

Firma Robert Bosch GmbH, 7000 Stuttgart 1

Vorrichtung bei mit einem Blockierschutzsystem (ABS) ausgerüsteten Kraftfahrzeugen

Stand der Technik

Die Erfindung geht aus von einer Vorrichtung nach der
Gattung des Hauptanspruchs.

Bei einem mit einer Blockierschutzeinrichtung (ABS) ausgerüsteten Kraftfahrzeug mit bestimmter Betriebsbremsen-
Konfiguration (Vorderradantrieb mit diagonalen Bremskreisen) ist es bekannt (US-PS 4 491 919), gleichzeitig mit
dem Einsetzen von ABS-Regelfunktionen durch eine entsprechende Druckbeaufschlagung des Kupplungszylinders über
ein Mehrwege-Magnetventil die Antriebsverbindung zu den
Vorderrädern zu unterbrechen, also auszukuppeln, um die
Bremswirkung der Brennkraftmaschine auf die von ihr angetriebenen Räder wenigstens zeitweise zu unterbrechen.

Hierdurch lassen sich gegenseitige Beeinflussungen sicher vermeiden. Das Wiedereinkuppeln erfolgt unabhängig vom Willen des Fahrzeugführers, vorzugsweise zeitgesteuert, um einen Kupplungsruck zu vermeiden. Dies kann allerdings Probleme aufwerfen, wenn aus bestimmten Gründen der Führer des Fahrzeugs noch während eines solchen ABS-Falls, also dann, wenn automatisch ausgekuppelt worden ist, das Fahrzeug beispielsweise für ein Ausweichmanöver beschleunigen möchte oder aus sonstigen Gründen willkürlich die Verbindung der Brennkraftmaschine mit den Antriebsrädern über die Kupplung wieder herstellen möchte.

Bekannt ist ferner (DE-AS 19 53 499), bei einer Blockierschutzvorrichtung für Kraftfahrzeugräder Mittel vorzusehen, die beim Betätigen des Bremspedals auf ein in den Kupplungskreis geschaltetes Steuerventil wirken, so daß auch die Kupplung ausrückt. Dieser ausgekuppelte Zustand wird auch bei einer Unterbrechung der Ansteuerung des Steuerventils über einen Selbsthaltekreis aufrechterhalten, bis durch das Loslassen des Bremspedals weitere Steuermittel ansprechen, so daß die Kupplung wieder selbsttätig eingerückt wird. Ein solcher Mechanismus kann deshalb problematisch sein, weil von dem Führer eines Fahrzeugs auch dann, wenn er einen eingekuppelten Zustand in einem Gefahrenfall wünscht, nicht immer erwartet werden kann, daß zunächst das Bremspedal von ihm völlig losgelassen wird. Hier können kostbare Sekunden vergehen, die das Fahrzeug dann ungebremst, aber auch ohne wirksame Kupplungsverbindung zurücklegt.

Schließlich ist es bei einer Fahrzeugantriebskupplung bekannt (DE-OS 33 09 712), bei hydraulischer Betätigung
der Kupplung den Arbeitszylinder mit zwei Arbeitskammern
zu versehen, wobei die eine Arbeitskammer in üblicher
Weise an einen Kupplungsgeberzylinder angeschlossen ist
und die andere Arbeitskammer über eine Druckmittelleitung mit einer Blockierschutz-Ventileinheit verbunden
ist, so daß die Kupplungsbetätigung zusätzlich von der
Blockierschutzeinrichtung so beeinflußt werden kann, daß
die Kupplung im ABS-Fall automatisch auskuppelt.

Grundsätzlich kann davon ausgegangen werden, daß dann,
wenn beispielsweise auf glatter Straße ein Fahrzeug mit
ABS-Regelung durch die Betriebsbremse abgebremst wird,
dieses Fahrzeug in seinem Fahrverhalten aufgrund der
Wirkungen der ABS-Regelfunktionen stabil bleibt. Andererseits ist eine wirksame ABS-Regelung dann nicht möglich, wenn das Abbremsen durch ein Herunterschalten
(Einsetzen von Motorbremsmoment) erfolgt. In diesem
Fall kann sich das Fahrzeug unfallträchtig verhalten,
beispielsweise Ausbrechen u. dgl. Die eingangs erwähnten bekannten Blockierschutzvorrichtungen können dies
verhindern, da sie geeignet sind, im ABS-Fall ein automatisches Auskuppeln zu gewährleisten. Problematisch
ist hierbei aber immer, daß durch ein solches automatisches Auskuppeln, also Abtrennen des oder der Antriebsstränge (gilt auch für an allen vier Rädern angetriebene Fahrzeuge), der Fahrer eines wesentlichen Freiheitsgrades beraubt wird, der dann nämlich nicht mehr in der
Lage ist, das Fahrzeug seinem Willen entsprechend zu
führen, also beispielsweise bewußt für ein Ausweichmanöver zu beschleunigen. Das automatische Auskuppeln kann
auch zu Unsicherheiten beim Fahrer führen.

DerErfindung liegt daher die Aufgabe zugrunde, eine kostengünstige und einfach aufgebaute Vorrichtung bei mit
einem Blockierschutzsystem ausgerüsteten Kraftfahrzeugen zu schaffen, die sicherstellt, daß der Fahrer jederzeit, auch dann, wenn automatisch im ABS-Fall ausgekuppelt ist, durch eine von ihm willkürlich vorgenommene,
also manuelle Kupplungsbetätigung die Übernahme der
Kupplung (Einkuppeln) bewirkt werden kann.

Vorteile der Erfindung

Diese Aufgabe löst die erfindungsgemäße Vorrichtung mit
den kennzeichnenden Merkmalen des Hauptanspruchs sowie
der nebengeordneten Ansprüche 2 und 3 und hat den Vorteil, daß durch spezielle Ausbildung eines zwischen den
Kupplungsgeberzylinder und den Kupplungsnehmerzylinder
geschalteten zusätzlichen Zylinder/Kolbenaggregats oder
durch entsprechende Ausgestaltungen am Kupplungsgeberzylinder bzw. am Kupplungsnehmerzylinder lediglich ein
Mehrwege-Magnetventil, insbesondere ein 3/2-Magnetventil notwendig ist, um sämtliche angesprochenen Maßnahmen durchzuführen, also vollautomatisches Auskuppeln
im ABS-Fall und Übernahme durch manuelles Kuppeln.

Bei der Ausbildung mit einem zwischengeschalteten Zylinder/Kolbenaggregat ist vorteilhaft, daß eine sichere
Betätigung eines elektrischen Schalters gewährleistet
ist, der von automatischem Auskuppeln auf manuelles Einkuppeln umschaltet und der durch eine geringe Gegenkraft des Kupplungsfußpedals in seine Ansprech-Endlage
gedrückt werden kann. In diesem Fall können Geber- und

Nehmerzylinder unverändert bleiben, so daß mit kostengünstigen Serienteilen gearbeitet werden kann.

Allgemein ist vorteilhaft, daß unter Beibehaltung der
von dem Fahrer eines Kraftfahrzeugs eingeübten Gewohnheit, durch Treten des Kupplungspedals einen Kupplungsvorgang durchzuführen, dies zu jedem Zeitpunkt auch beim automatischen Auskuppeln möglich ist, so daß der Fahrer
weiß, daß er stets die Verfügungsgewalt über sein Fahrzeug behält, andererseits aber dann, wenn ein Einkuppeln
nicht erforderlich ist, der Einfluß des Antriebsmotors
auf den durch die ABS-Regelung bewirkten jeweiligen
Bremsvorgang unbeeinflußt bleibt. Die Erfindung ist in
derLage, es dem Fahrer mit geringstem zusätzlichem mechanischem und elektronischem Aufwand zu ermöglichen,
einen willkürlichen, im folgenden als manuell bezeichneten Kupplungseingriff an seinem Fahrzeug vorzunehmen.

Durch die in den Unteransprüchen aufgeführten Maßnahmen
sind vorteilhafte Weiterbildungen und Verbesserungen der
Erfindung möglich.

Zeichnung

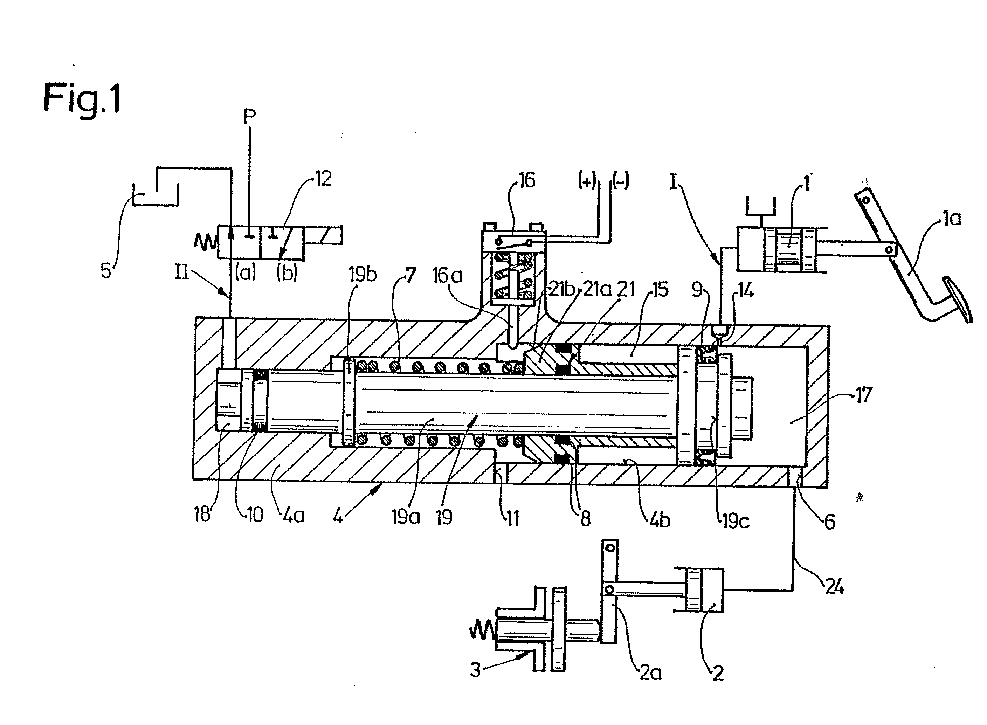

Ausführungsbeispiele der Erfindung sind in der Zeichnung
dargestellt und werden in der nachfolgenden Beschreibung
näher erläutert. Es zeigen Fig. 1 eine erste Ausführungsform der Erfindung zur automatischen Kupplungsbetätigung und Übernahme durch manuelles Kuppeln mit
zwischen den Kupplungsgeberzylinder und den Kupplungsnehmerzylinder geschaltetem Zylinder/Kolben-Hilfsaggregat, schematisiert und teilweise im Längsschnitt,

0231465

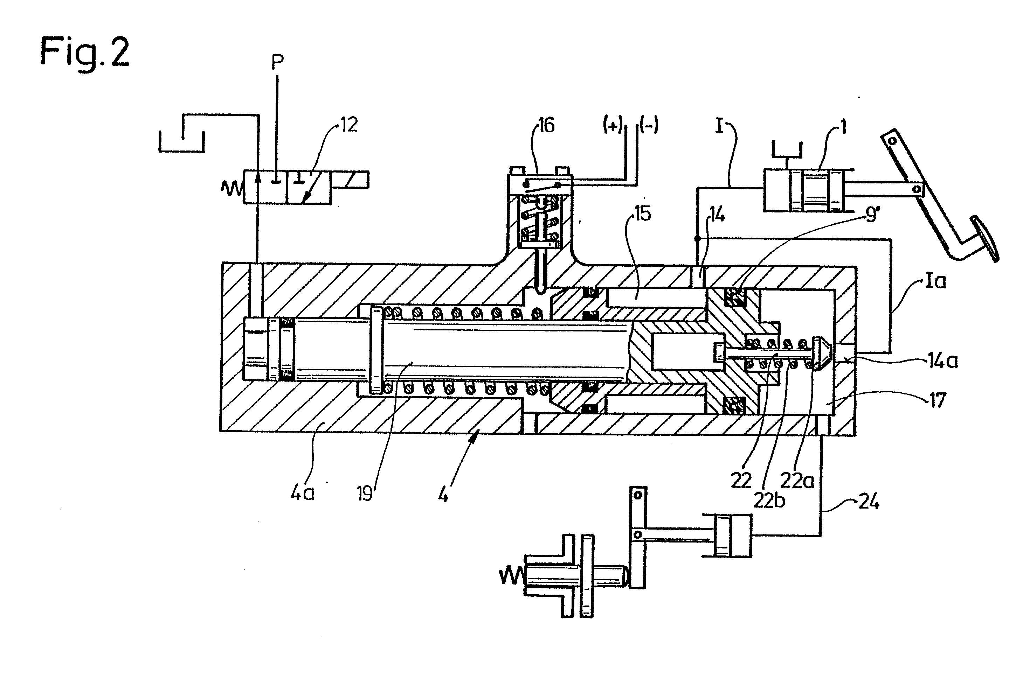

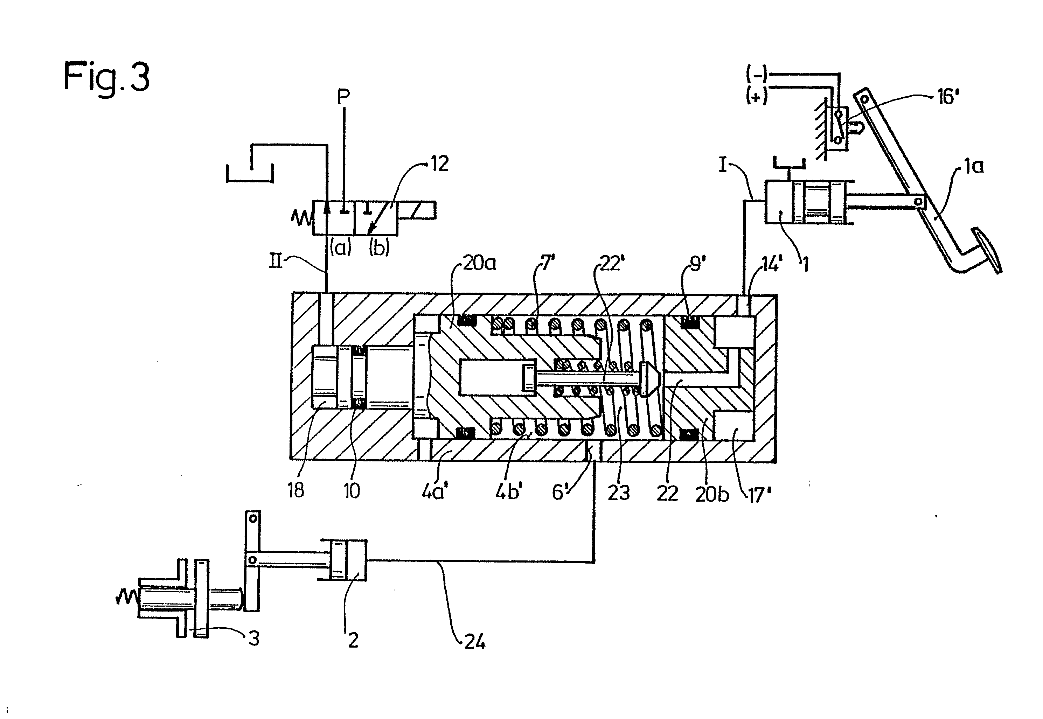

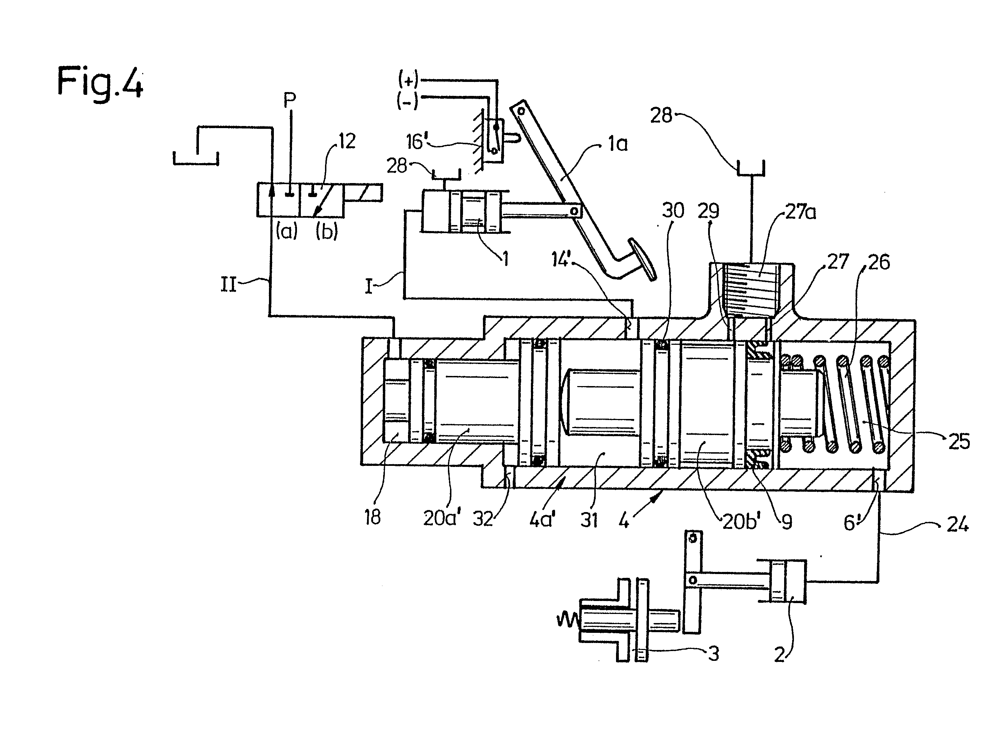

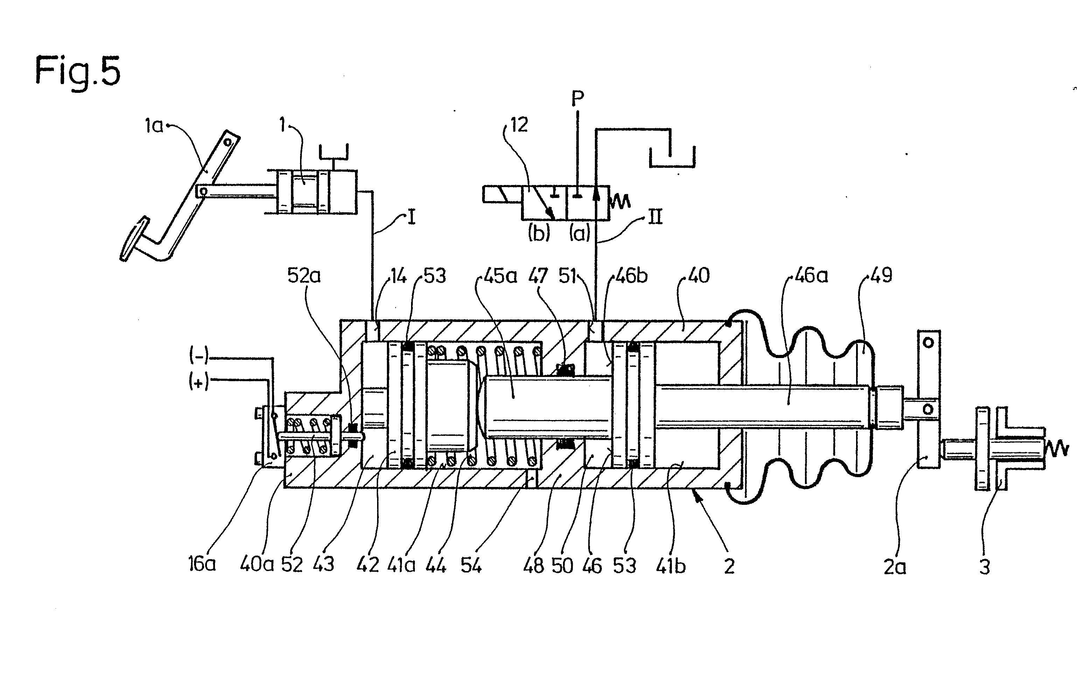

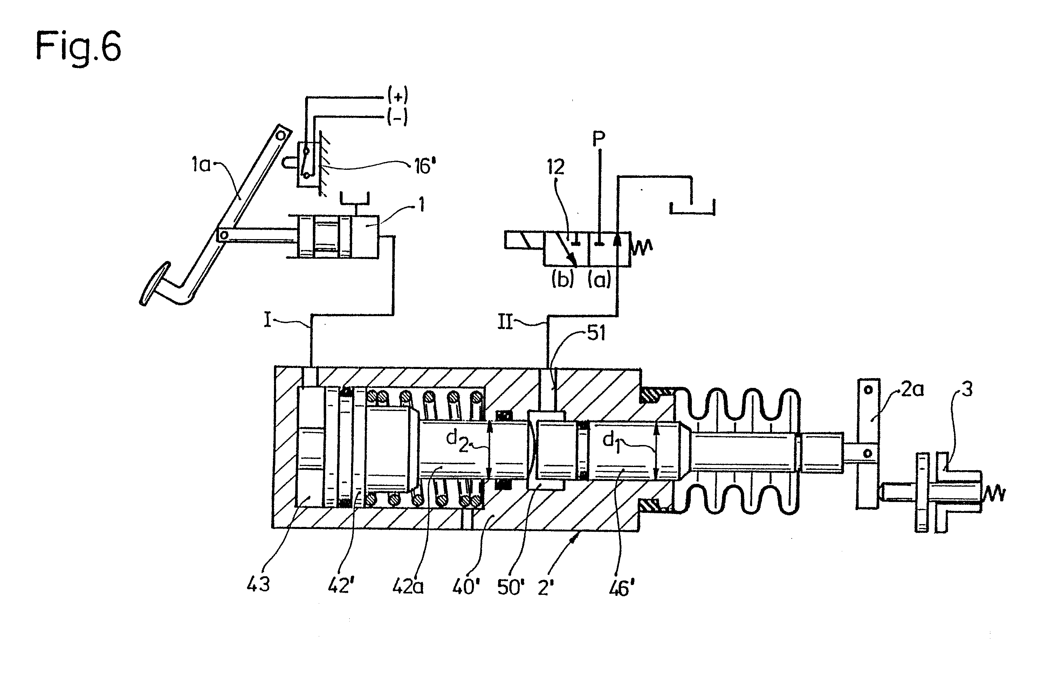

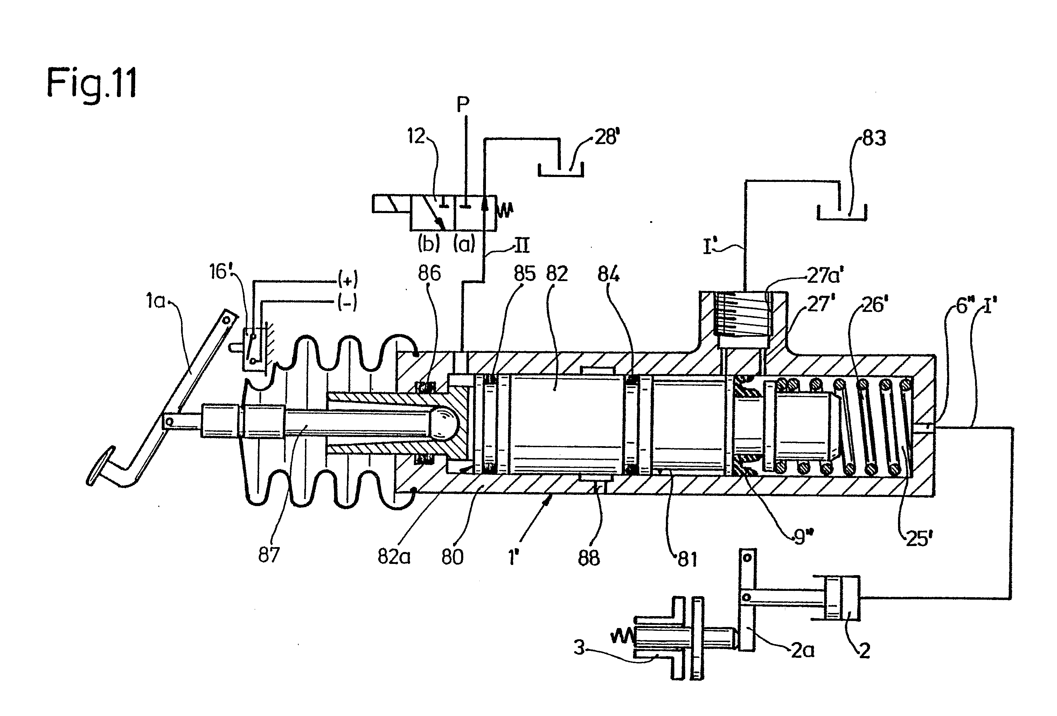

Fig. 2 eine Variante des Zylinder/Kolben-Hilfsaggregats
entsprechend Fig. 1, Fig. 3 eine weitere Variante des
Zylinder/Kolbenaggregats zwischen dem Kupplungsgeberzylinder und dem Kupplungsnehmerzylinder, ebenfalls im
Querschnitt und Fig. 4 eine der Darstellung der Fig. 1
entsprechende Ausführungsform mit geteiltem Zwischenkolben, Fig. 5 zeigt eine Ausführungsform der vorliegenden Erfindung, bei der der vom Kupplungsgeberzylinder
beaufschlagte Kupplungsnehmerzylinder so mit zusätzlichen Betätigungsmitteln ausgestattet ist, daß er sowohl
die automatische Kupplungbetätigung als auch das manuelle Lösen der Kupplung übernimmt, in einer ersten Variante im Querschnitt, Fig. 6 eine im Bereich des Kupplungsnehmerzylinders geänderte Variante der Darstellung der
Fig. 5, desgleichen die Fig. 7 und 8, während die

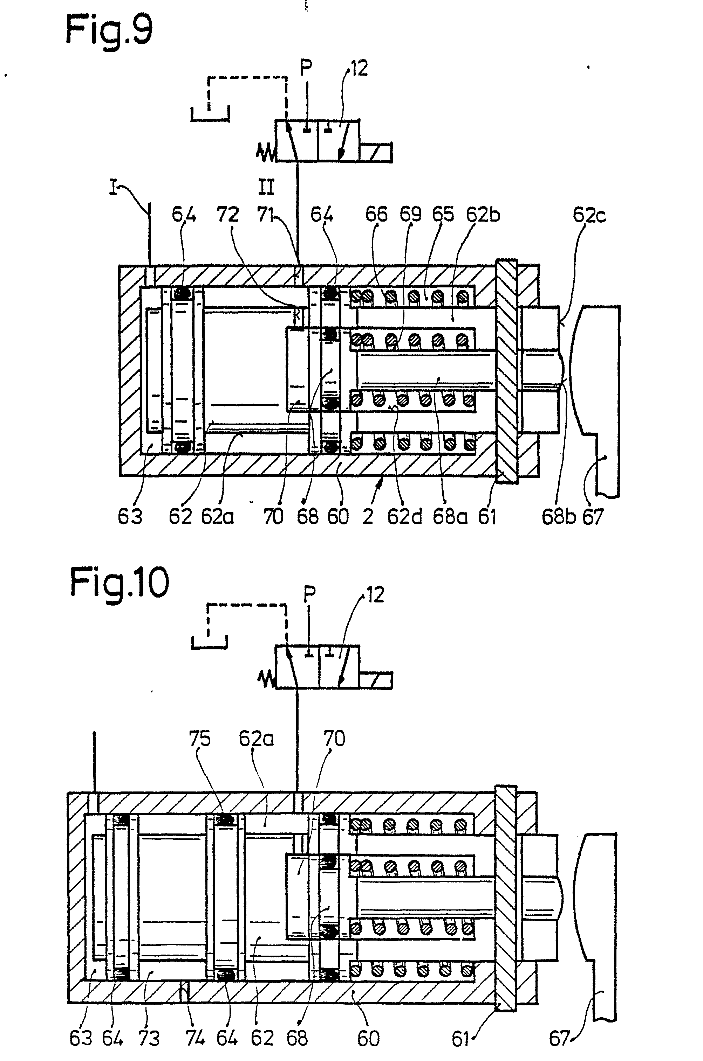

Fig. 9 und 10 Ausführungsformen von Kupplungsnehmerzylindern in Teleskopbauweise zeigen, die ebenfalls
gleichzeitig für das automatische Kuppeln im ABS-Fall
und für die manuelle Übernahme (Lösen der Kupplung) geeignet sind; schließlich zeigen die folgenden Ausführungsformen in den Fig. 11 bis 14 Varianten des Grundgedankens, bei einem durch einen ABS-Fall veranlaßten
automatischen Kuppeln eine manuelle Übernahme zu ermöglichen, wobei in diesem Fall der Kupplungsgeberzylinder
entsprechend ausgestaltet und jeweils im Längsschnitt
dargestellt ist.


Beschreibung der Ausführungsbeispiele


In Fig. 1 ist zwischen dem von einem Kupplungspedal 1a beaufschlagten Kupplungsgeberzylinder 1 und dem Kupplungsnehmerzylinder 2, der über ein Gestänge 2a auf die bei 3 angedeutete Kupplung wirkt, ein Zwischen- oder Hilfsaggregat 4 geschaltet, welches sowohl die übliche Druckübertragung vom Geberzylinder 1 auf den Nehmerzylinder 2 für die Kupplungsbetätigung zuläßt als auch einen selbsttätig, also automatisch ablaufenden Kupplungseingriff von zu einem Blockierschutzsystem gehörenden Komponenten ermöglicht, so daß je nach auftretendem ABS-Fall ausgekuppelt und der Antriebsstrang zwischen dem Antriebsmotor und den angetriebenen Rädern, bei einem Allradfahrzeug also zwischen sämtlichen Rädern, aufgetrennt wird. Ferner ermöglicht es dieses Zwischenaggregat, welches von einem Kolben/Zylinderbetätigungselement gebildet ist, bei entsprechender Kupplungspedalbetätigung den Kupplungsvorgang, in diesem Fall also das Einkuppeln, vom Fahrer manuell zu übernehmen.

Auf den Aufbau des Kupplungsgeberzylinders sowie des Kupplungsnehmerzylinders und die Gestaltung der Übertragung der hier erzeugten Druckkraft braucht nicht genauer eingegangen zu werden, da dies in üblicher Weise geschehen kann; vorhanden sind zwei in diesem Fall getrennte Druckmittelkreise (Hydraulikkreise), und zwar ein Kreis I, der mit Bremsflüssigkeit als Druckmittel beispielsweise betrieben werden kann, und ein Kreis II, der an eine zentrale, nicht dargestellte Druckversorgung P angeschlossen ist und beispielsweise mit Mineralöl oder einem sonstigen geeigneten Druckmittel betrieben wird. Der Druckmittelkreis II wird durch ein Magnetventil 12 gesteuert, welches bei diesem Ausführungsbeispiel ein sogenanntes 3/2-Wegemagnetventil ist.

Das Zwischenaggregat 4 umfaßt ein vorzugsweise einstückiges Gehäuse 4a, welches mit abgestufter Innenbohrung 4b eine Zylinderführung für einen gleitverschieblich gelagerten, bei dem dargestellten Ausführungsbeispiel einstückigen Kolben 19 bildet.

In Verbindung mit dem Kolben 19 bildet das Gehäuse 4a drei Arbeitskammern 15, 17 und 18, wobei die Arbeitskammer 18 über das 3/2-Wegemagnetventil 12 von dem Druckmittel der zentralen Druckversorgung P beaufschlagt bzw. in einem Druckmittelvorratsbehälter 5 entlüftet ist, während die Arbeitskammer 17 über eine Zulaufbohrung 14, die in diesem Fall als Schnüffelbohrung ausgebildet ist, vom Druckmittel im Hydraulikkreis I vom Geberzylinder 1 beaufschlagt ist und über eine Auslaßöffnung 6 mit dem Kupplungsnehmerzylinder 2 in Verbindung steht. Schließlich ist die dritte Arbeitskammer 15 gebildet von einem auf einen mittleren Kolbenschaft 19a gleitverschieblich aufgesteckten Ringkolben 21, der in einem verdickten Kopfteil 21a gegenüber der Zylinderführung 4b des Gehäuses 4a und dem Kolbenschaft 19a über äußere und innere Dichtungen 8 abgedichtet ist.

Das in der Zeichenebene linksseitige Kolbenende ist verjüngt und läuft in einer abgesetzten Zylinderführung mit geringem Durchmesser; dabei stützt sich der Ringkolben 21 über eine Vorspannungsfeder 7 an einem Ringkragen 19b des Kolbens 19 ab. Ferner ist in der in der Zeichnung gezeigten Ausgangsposition des Kolbens 19 angrenzend zur Einlaßbohrung 14 in einer Ringausnehmung 19c des Kolbens 19 eine Dichtung 9 angeordnet, die bei dem dargestellten Ausführungsbeispiel als Schnüffelmanschette ausgelegt ist. Bei Verschiebung des Ringkolbens
21 in der Zeichenebene nach links wird schließlich in
einer vorgegebenen Endposition über eine Schrägfläche
21b des Ringkolbens ein Übertragungsstift 16a eines
elektrischen Schalters 16 betätigt, der die Aufgabe hat,
die im ABS-Fall erfolgende Ansteuerung des Magnetventils
12 (dieses befindet sich dann in der Stellung b) wieder
aufzuheben und dieses in die Stellung a (zurück)zuschalten. Durch eine weitere Dichtung 10 am verjüngten
Kolbenkopf ergibt sich die erforderliche Medientrennung
(Trennung des Kreises I vom Kreis II). Der Zwischenraum,
in welchem auch der Ringkolben 21 gleitet, ist durch
eine Radialbohrung 11 entlüftet.

Es ergeben sich dann bei einer solchen Vorrichtung zur
automatischen Kupplungsbetätigung und manuellen Übernahme die folgenden Funktionen.

Zum automatischen Auskuppeln bei einsetzenden ABS-Regelfunktionen wird das 3/2-Wegemagnetventil 12 in die Position b umgeschaltet, so daß der Kolben 19 durch die
Druckversorgung P in der Zeichenebene nach rechts gegen
den Kupplungsnehmerzylinder 2 verschoben wird. Dabei
überfährt der Kolben 19 mit seiner Nutringdichtung 9
die Zulauföffnung 14 vom Geberzylinder 1 und trennt so
den Kreis I vom Nehmerzylinder. Gleichzeitig wird
dann in dieser Endposition eine Verbindung des Kreises
I mit dem Arbeitsraum 15 hergestellt. Durch den sich
hierdurch ergebenden Druckaufbau im Raum 17 wird der
Nehmerzylinder 2 verstellt und automatisch, durch den
ABS-Fall veranlaßt, gekuppelt.

Auf die übliche Kupplungsbetätigung (keine ABS-Regelfunktion) braucht nicht weiter eingegangen zu werden, da diese sich in der in Fig. 1 gezeigten Position des Kolbens 19 über den Hydraulikkreis I, die Arbeitskammer 17 und die Auslaßöffnung 6 direkt zum Nehmerzylinder 2 ergibt (Ventil 12 in Stellung a).

Ergibt sich jetzt der Fall einer Übernahme durch manuelle Kupplungsbetätigung, dann tritt der Fahrer oder die Bedienungsperson das Kupplungspedal 1a so, wie sie dies stets gewohnt ist, nieder und der sich hierdurchergebende Druckaufbau in der Arbeitskammer 15 verschiebt den Ringkolben 21 mit vergleichsweise geringem Widerstand gegen den Druck der Druckfeder 7, so daß in einer vorgegebenen Position des Kupplungspedals der elektrische Schalter 16 betätigt und das Ventil 12 in seine Stellung a umgeschaltet wird.

Bei der Übernahme durch manuelles Kuppeln wirkt daher am Fußpedal 1a zunächst nur eine geringe Kraft (von Druckfeder 7) und daher praktisch ohne Pedalrückwirkung; wird dann über den Schalter 16 die automatische Betätigung weggeschaltet, dann ergibt sich bei dem dargestellten Ausführungsbeispiel die sofortige Einwirkung der Kupplungskraft auf das Fußpedal 1a über den Raum 17 und den Raum 15 auf den Geberzylinder 1. Eingekuppelt wird dann durch manuelles Steuern des Geberzylinders, indem die Bedienungsperson das Kupplungspedal 1a wie gewohnt zurücknimmt.

Um die gegebenenfalls abrupte Einwirkung der Kupplungskraft bei Wegschalten automatischer Betätigung zu mildern, können, falls gewünscht, Verzögerungsglieder vorgesehen sein oder man kann durch einen in der Zeichnung
nicht dargestellten, als Endschalter ausgebildeten Druckschalter mit entsprechender Bemessung in der Endlage
die Pedalkraft entsprechend anheben, wobei dann dieser
Endschalter die automatische Betätigung wegschaltet.
Der Endschalter könnte beispielsweise im Bereich des
Kupplungspedals 1a angeordnet und so eingestellt sein,
daß er mit seinem Druck unterhalb des maximalen Drucks
der Druckversorgung P liegt, so daß ein sicheres Schalten gewährleistet ist. Dies gilt sinngemäß auch für die folgenden Ausführungsformen, soweit nicht auf andere Möglichkeiten hingewiesen wird.

Das in Fig. 1 gezeigte Ausführungsbeispiel gewährleistet
ein sicheres Betätigen des elektrischen Schalters 16,
da durch die geringe, von der Feder 7 erzeugte Gegenkraft
das Fußpedal 1a sicher bis in die Endlage gedrückt werden
kann.

Bei dem Ausführungsbeispiel der Fig. 2, bei dem, wie
auch in allen anderen Ausführungsbeispielen für gleiche
Teile gleiche Bezugszeichen beibehalten und für sich in
etwa entsprechende Komponenten mit gleichwirkenden Funktionen das gleiche Bezugszeichen, ergänzt durch einen
Beistrich oben verwendet wird, ist im Unterschied zu
Fig. 1 dem Hydraulikkreis I eine Zweigleitung Ia zugeordnet, die mit eigenem Zulauf bei 14a unmittelbar in
die Arbeitskammer 17 einmündet. Da statt der Schnüffeldichtmanschette 9 eine normale Dichtung 9' und ergänzend ein Zentralventil 22 vorgesehen ist, kann die erste Zulaufbohrung 14 des Hydraulikkreises I groß gehalten werden, so daß jederzeit ein schnelles Kuppeln möglich ist. Die Grundfunktion des Ausführungsbeispiels

der Fig. 2 ist im wesentlichen gleich mit dem Ausführungsbeispiel der Fig. 1, mit dem Unterschied, daß schon in der Ausgangsposition die erste Zulaufbohrung 14 in der nach rechts gerichteten Bewegungsrichtung des Kolbens 19 hinter diesem liegt, also in die Arbeitskammer 15 einmündet und das Zentralventil 22 bei automatischer Kupplungsübernahme die zweite Zulaufbohrung 14a in die Arbeitskammer 17 mit einem Ventilteller 22a und unter dem Druck einer Vorspannungsfeder 22b verschließt.

Das Ausführungsbeispiel der Fig. 3 kombiniert in vorteilhafter Weise Merkmale der Darstellungen in den Figuren 1 und 2; der Kolben des Zwischenaggregats ist zweigeteilt und umfaßt die beiden Teilkolben 20a und 20b, die gleichverschieblich in der Führungsbohrung 4b' des Gehäuses 4a' gelagert sind. Über eine Vorspannungsfeder 7', die sich zwischen den beiden Kolben 20a und 20b befindet und sich an diesen abstützt, werden diese in ihre definierten, in Fig. 3 gezeigten Anschlagpositionen im Gehäuse gepreßt. Eine Ringausnehmung im dem hydraulischen Kreis I zugeordneten Teilkolben 20b bildet die Arbeitskammer 17'; von der Ringkammer 17' verläuft ein Kanal 22 zu einer mittleren Arbeitskammer 23, deren Auslaßbohrung 6' mit dem Kupplungsnehmerzylinder 2 verbunden ist. Der Aufbau vervollständigt sich durch ein schon in Fig. 2 gezeigtes Zentralventil 22', welches im in der Zeichenebene linken Kolbenteil 20a gelagert ist und die Austrittsöffnung des zentralen Kanals 22 im Teilkolben 20b mit seinem Ventilteller verschließen kann. Auch hier kann anstelle der Schnüffelmanschettendichtung 9 in Fig. 1 ein einfacher O-Ring 9' eingesetzt werden, bei ebenfalls ungehindert großer Einlaßbohrung 14' für die vom Kupplungsgeberzylinder 1 kommende Druckleitung.

Es ergeben sich dann folgende Funktionen. Bei manuellem Kuppeln wirkt der Geberzylinder 1 über die Druckleitung des hydraulischen Kreises I und den Kanal 22 bei geöffnetem Zentralventil 22' in den Druckraum 23 und von dort auf den Kupplungsnehmerzylinder 2, wobei sich das im ABS-Fall zu betätigende Magnetventil 12 als 3/2-Wegeventil in der Stellung a befindet.

Beim automatischen Kuppeln schaltet das Magnetventil 12 durch entsprechende Ansteuerung in die Position b um, der linke Teilkolben 20a fährt nach rechts, wodurch das Zentralventil 22' die Austrittsöffnung des Kanals 22 verschließt und den Druckraum 23 vom hydraulischen Kreis I trennt. Dabei wird im Druckraum 23 ein entsprechender Druck aufgebaut, der über den Kupplungsnehmerzylinder 2 zum Auslösen der Kupplung (Auskuppeln) führt.

Die Übernahme durch manuelles Kuppeln, wenn sich das Gesamtsystem in der Position "automatisch ausgekuppelt" befindet, geht so vor sich, daß bei Betätigen des Kupplungspedals 1a der Geberzylinder 1 Druck im Raum 17' aufbaut und auf den Kolben 20b einwirkt, so daß dieser den anderen Teilkolben 20a gegen den Druck der Druckversorgung P nach links zurückschiebt, bis in einer vorgegebenen Endstellung des Kupplungspedals der in diesem Falle angrenzend zum Kupplungspedal angeordnete elektrische Schalter 16' anspricht und das Magnetventil 12 umschaltet. Dieses geht in Stellung a , und die Kupplungskraft (Rückwirkung vom Kupplungsnehmerzylinder 2) wirkt lediglich noch auf den Geberzylinder ein. Wird das Kupplungspedal 1a dann losgelassen, dann fährt der Teilkolben
20b wieder in seine in der Fig. 3 dargestellte Position
zurück und das Zentralventil 22', welches erforderlich
ist, um eventuelle Leckagen auszugleichen, öffnet.

Es versteht sich, daß durch eine geeignete, selektiv
oder verzögernd ansprechende Elektronik ein Verbleiben
des Magnetventils 12 in der durch die Betätigung des
elektrischen Schalters 16' bewirkten Position a sichergestellt ist, auch wenn nachfolgend wieder ein ABS-
Signal ergehen sollte, was allerdings in erster Linie
nicht anzunehmen ist, da ABS-Regelfunktionen nur dann
entstehen, wenn die Betriebsbremse betätigt ist und der
Benutzer nicht gleichzeitig zu Zwecken eines Beschleunigens, also Gasgebens einkuppelt und die Bremse betätigt.
Da allerdings solche Situationen unter bestimmten Bedingungen nicht auszuschließen sind und außerdem gerade
im angesprochenen Fall das vom Antriebsmotor herrührende Bremsmoment ausgeschaltet werden soll, kann man durch
Zeitverzögerungsmittel in den Ansteuerschaltkreisen für
das Magnetventil 12 sicherstellen, daß dieses für einen
vorgegebenen Zeitraum nach manueller Übernahme der
Kupplung nicht erneut anspricht. Es ist auch möglich,
bestimmte Signale aus der ABS-Regelung und vom Schalter
16' unter Einbeziehung von Zeitverzögerungsmitteln zu
verknüpfen und so ein gewünschtes Schaltverhalten im
Kupplungsbereich sicherzustellen.

Im Unterschied zu den Ausführungsbeispielen der Figuren 1 und 2, bei denen bei Übernahme durch manuelles
Kuppeln am Fußpedal zunächst eine geringe Kraft (ohne
nennenswerte Pedalrückwirkung) wirkt und bei Wegschalten der automatischen Betätigung die volle Kupplungskraft
auf das Fußpedal abrupt einwirkt, wird bei dem Ausführungsbeispiel der Fig. 3 der Kolben 20a gegen die Druckversorgung P durch die Fußkraft zurückgeschoben, so daß
bei Betätigung des Endschalters 16' (bei Fig. 3 im Kupplungspedalbereich) die automatische Betätigung völlig
aufgehoben ist, auch wenn Kupplungsverschleiß auftritt.
Hierdurch ist sicheres Einkuppeln gewährleistet mit dem
weiteren Vorteil einer völlig ruckfreien Übernahme.

Bei dem Ausführungsbeispiel der Fig. 4 sind ebenfalls,
wie in Fig. 3, zwei Teilkolben 20a' und 20b' in dem
innen stufig abgesetzten Zylindergehäuse 4a' des Zwischenaggregats 4 angeordnet, wobei der zum Kupplungsnehmerzylinder 2' führende hydraulische Unterkreis völlig von
dem hydraulischen Kreis I des Kupplungsgeberzylinders 1
und natürlich auch zum hydraulischen Kreis II der Druckversorgung P getrennt ist. Es ist eine über eine Druckleitung 24 mit dem Kupplungsnehmerzylinder 2 verbundene
Druckkammer 25 vorgesehen, die von dem auf seiner anderen Seite vom Druck des Hydraulikkreises I beaufschlagten Kolben 20b' begrenzt ist, der im Ausgangszustand
durch eine Vorspannungsfeder 26 im Druckraum 25 auf
linksseitigen Anschlag gehalten ist, in welchem ein
Druckbehälterzulauf 27 von einer Schnüffelmanschettendichtung 9 (vgl. auch Fig. 1) freigegeben ist. Die beiden im Bereich des Kupplungsgeberzylinders 1 und mit
dem Behälteranschluß 27a verbundenen Druckmittelbehälter können auch von einem gemeinsamen Behälter 28 gebildet sein. Ein weiterer Behälterzulauf 29 ist mit
einem vom Kolben 20b' gebildeten Ringraum verbunden;
der Kolben 20b' hat eine weitere Dichtung 30, da der ungedrosselte Druckanschluß 14' des Hydraulikkreises I
in einen Druckraum 31 vor dem Kolben 20b' mündet. Da der
unter der Einwirkung der Druckversorgung P stehende
erste Kolben 20a' im Durchmesser abgesetzt ist, ist
schließlich noch eine Be- und Entlüftungsöffnung 32 für
diesen vorgegeben.

Es ergeben sich folgende Funktionen. Bei manueller Kupplungsbetätigung überfährt die Schnüffelmanschettendichtung 9 aufgrund des sich im Raum 31 ergebenden Druckaufbaus durch die nach rechts verlaufende Verschiebung des
Kolbens 20b' die Schnüffellochbohrung 27 zum Druckmittelbehälter 28 und die Druckerhöhung im Druckraum 25
führt zur Kupplungsbetätigung.

In gleicher Weise ergibt sich die automatische Kupplungsbetätigung bei Umschalten des 3/2-Wegeventils 12 in die
Position b ; der Druckaufbau im Druckraum 18 verschiebt
beide Teilkolben 20a' und 20b' in der Zeichenebene nach
rechts.

Bei der Übernahme durch manuelles Kuppeln wird auch hier,
wie bei dem Ausführungsbeispiel der Fig. 3, der unter
dem Druck der Druckversorgung P stehende Servokolben
(erster Teilkolben 20a') durch die Fußkraft zurückgeschoben, so daß hier von Anfang an ein entsprechender
Kupplungsbetätigungsdruck manuell aufzubringen ist, bis
der elektrische Endschalter 16' anspricht, den Druck
der Druckversorgung P wegschaltet und die ruckfreie
Übernahme für die manuelle Betätigung möglich ist.

Die folgenden Figuren 5 bis 10 beziehen sich auf eine Bauart bei vorliegender Erfindung, bei der der Kupplungsnehmerzylinder so ausgestaltet und ergänzt ist, daß durch
diesen sowohl die automatische Kupplungsbetätigung übernommen als auch die Freigabe (Lösen der Kupplung) durch
die manuelle Einwirkung am Kupplungspedal erreicht wird.

Das Gehäuse 40 des Kupplungsnehmerzylinders 2' enthält in
zwei getrennten, Kolbenführungen bildenden Bohrungen 41a
und 41b einen ersten Teilkolben 42, der einen endseitigen Druckraum 43 begrenzt, in welchen über eine Zulauföffnung 14 der dem Kupplungsgeberzylinder 1 zugeordnete
hydraulische Kreis I einmündet. Dieser erste Teilkolben
42 ist über eine Vorspannungsfeder 44 in die in der
Fig. 5 dargestellte Endlage gedrückt und steht über einen
Druckstößel 45a mit einem zweiten Teilkolben 46 in Wirkverbindung, wobei der Druckstößel 45a einstückig am
zweiten Kolben 46 angeordnet sein kann und eine durch
eine Dichtung 47 abgedichtete Trennwand 48 des Nehmerzylindergehäuses 40 durchsetzt. Auf der dem Druckstößel
45a gegenüberliegenden Seite des Kolbens 46 erstreckt
sich eine kolbenstangenartige Verlängerung 46a zu einem
Anlenkpunkt des Kupplungsbetätigungsgestänges 2a. In üblicher Weise kann dieser Bereich von einer Manschette 49
abgedichtet sein. Der zweite Kolben 46 bildet mit einer
Ringfläche 46b die Begrenzung eines Druckraums 50, der
über eine Einlaßöffnung 51 mit dem hydraulischen Kreis
II und daher über das 3/2-Wegeventil 12 mit der Druckversorgung P je nach dessen Schaltposition in Verbindung steht.

In Wirkverbindung mit dem vom hydraulischen Kreis I beaufschlagten Druckraum 43 steht ferner der für die Rückschaltung des Ventils 12 zuständige elektrische Schalter 16a, der diesmal als Druckschalter ausgebildet ist, in einem Gehäuseansatz 40a sitzt und über einen von einer Dichtung 52a abgedichteten Druckstößel 52 bei Erreichen eines vorgegebenen Druckwerts im Druckraum 43 betätigt wird. Ferner sind noch Dichtringe 53 an den beiden Kolben 42 und 46 vorgesehen. Auch hier kann der hydraulische Kreis I mit Bremsflüssigkeit, der Kreis II von der Druckversorgung P mit Mineralöl als Druckmittel betrieben sein. Eine Bohrung 54 entlüftet den Zwischenraum.

Die Wirkungsweise beim manuellen Kuppeln ist so, daß der Kupplungsgeberzylinder 1 auf den ihm zugeordneten Kolben 42 einwirkt und über den beide Kolben verbindenden Druckstößel 45a den Kolben 46 verschiebt, so daß sich durch letzteren eine direkte mechanische Einwirkung auf das Kupplungsdrucklager ergibt. Das Ventil 12 befindet sich in der Position a .

Ergibt sich im ABS-Fall der automatische Kupplungsvorgang, dann schaltet das Magnetventil 12 in die Position b um und durch den auf die Ringfläche 46b einwirkenden Druck der Druckversorgung wird der zweite Kolben 46 ebenfalls in der Zeichenebene nach rechts zur Kupplungsbetätigung (Auskuppeln) gedrückt.

Zur Übernahme durch manuelles Kuppeln wird das Kupplungsfußpedal 1a zunächst mit geringerem Widerstand durchgetreten, bis der Kolben 42 am nunmehr rechts stehenden Kolben 46 anliegt - anschließend baut sich im Druckraum 43 Druck soweit auf, bis der Druckschalter 16a anspricht und das Magnetventil 12 in seine Position a umschaltet. Die Kupplungskraft wirkt dann allein nur noch auf den ersten Kolben 42 zurück und damit auf den Kupplungsgeberzylinder 1, wodurch manuell eingekuppelt werden kann. Auch hier ergibt sich daher wie bei den Ausführungsbeispielen der Figuren 1 und 2 am Kupplungsfußpedal zunächst eine geringe Kraft ohne wesentliche Pedalrückwirkung und anschließend bei Wegschalten der automatischen Betätigung die abrupte Rückwirkung der Kupplungskraft auf das Fußpedal. Dies kann, wie weiter vorn schon erwähnt, durch Verzögerungsschalter, falls gewünscht, verbessert werden, die beispielsweise die Rückschaltung des Magnetventils 12 beeinflussen oder gegebenenfalls auch durch Anordnung einer Drossel im Hydraulikkreis II, so daß sich beim Umschalten des Ventils 12 ein allmählicher Druckabbau im Druckraum 50 ergibt. Ferner kann der Druckschalter 16a, wie ebenfalls schon erwähnt, so eingestellt sein, daß dieWegschaltung der automatischen Betätigung erst dann erfolgt, wenn eine entsprechende Pedalkraft zur Druckerhöhung im Druckraum 43 ausgeübt ist. So läßt sich der Druckschalter 16a unterhalb des maximalen Drucks der Druckversorgung P einstellen, so daß sicheres Schalten gewährleistet ist bei nur noch minimaler Änderung der aufgebrachten Fußpedalkraft, wenn das Ventil 12 umschaltet.

Das Ausführungsbeispiel der Fig. 6 ähnelt der Darstellung der Fig. 5; auch hier sind im Gehäuse 40' des Kupplungsnehmerzylinders 2' ein erster, unter dem Druck des hydraulischen Kreises I vom Kupplungsgeberzylinder 1 her zu betätigender Kolben 42' und ein bei der manuellen Betätigung durch eine mechanische Stößelverbindung angetriebener zweiter Kolben 46' angeordnet, wobei in diesem Fall der mechanische Druckstößel 42a vom ersten Kolben 42'
ausgeht und in den Druckraum 50' ragt, diesen also auf der
einen Seite begrenzt, wobei der zweite Kolben 46' den
Druckraum 50' auf der anderen Seite begrenzt. Der Druckraum 50' wird vom hydraulischen Kreis II bei Umschaltung
des 3/2-Wegemagnetventils von der Druckversorgung P beaufschlagt. Der elektrische Endschalter 16' zur Umschaltung des Ventils 12 kann beispielsweise mechanisch vom
Kupplungspedal 1a betätigt sein. Bevorzugt sind die Durchmesser d1 und d2 des Kolbens 46' und der Kolbenverlängerung 42a des Kolbens 42', die den Druckraum 50' begrenzen, von gleichem Durchmesser, also d1 = d2.

Die Funktion bei manueller Betätigung ist die gleiche wie
beim Ausführungsbeispiel der Fig. 5 - der erste Kolben
42' schiebt bei Druckaufbau im Druckraum 43 den zweiten
Kolben 46' zur Kupplungsauslösung in der Zeichenebene
nach rechts.

Ist die automatische Kupplungsbetätigung eingeschaltet
(Ventil 12 in Schaltstellung b), dann läuft der Kolben
46' nach rechts, gleichzeitig wirkt aber der Druck der
Druckversorgung P auf den Kolben 42', so daß sich eine
entsprechende Pedalrückwirkung ergibt. Da die Durchmesser d1 und d2 gleich groß sind, wirkt die maximale Gegenkraft auf das Fußpedal 1a, gegen welche dieses dann
bei der Funktion der manuellen Kupplungsübernahme gedrückt werden muß. Der Servodruck der Druckversorgung P
wirkt daher voll auf das Fußpedal, so daß an diesem von
Anfang an bei der Betätigung durch den Fahrer der volle
Kupplungsdruck aufgebracht werden muß. Es versteht sich
im übrigen, daß der hier wieder mechanisch durch das Fußpedal 1a betätigte elektrische Schalter 16' auch an
beliebiger anderer Stelle angeordnet sein kann und
gleichermaßen auch als Druckschalter, wie in Fig. 5,
ausgebildet sein kann.

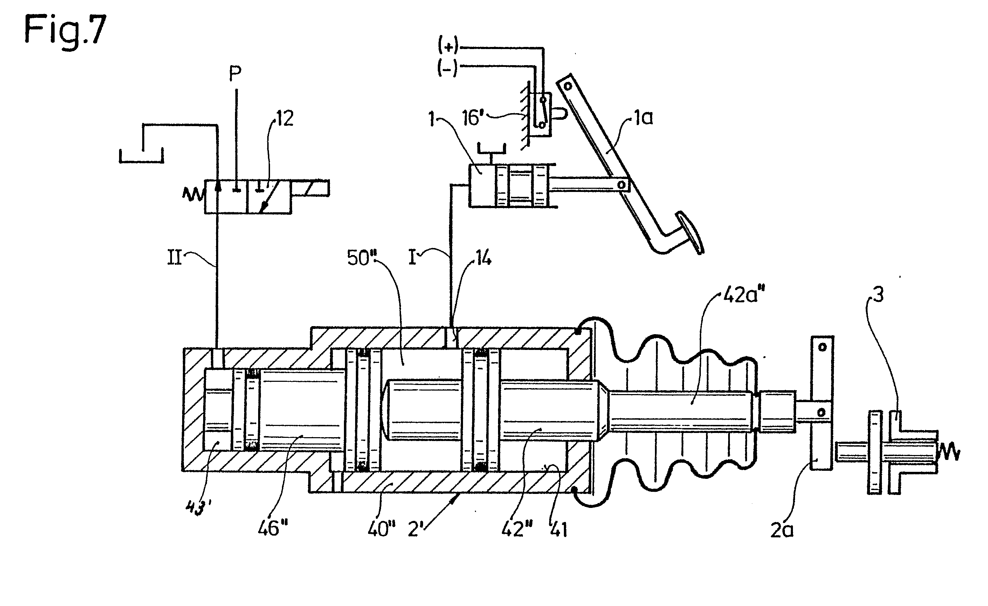

Bei der Ausführungsform der Fig. 7 sind beide Kolben,
der von der Druckversorgung P beaufschlagte Kolben 46"
und der durch manuelle Betätigung über den hydraulischen
Kreis I beaufschlagte Kolben 42" in einer durchgehenden,
also in der gleichen, abgestuften Zylinderführungsbohrung 41 angeordnet, allerdings mit der Maßgabe, daß die
beiden Kolben in ihrer Position vertauscht sind, es
also der Kolben 42" ist, der über eine kolbenstangenartige Verlängerung 42a" mit dem Gestänge 2a der Kupplung 3 in Wirkverbindung steht. Dieser Kolben 42" wird
über die Einlaßöffnung 14 in den von beiden Kolben 46"
und 42" mit gleichem Durchmesser begrenzten Druckraum
50" vom Kupplungsgeberzylinder 1 beaufschlagt, während
der in der Zeichenebene linke Kolben 46" über das Magnetventil 12 an die Druckversorgung P geschaltet werden
kann. Die Funktion bei manueller Betätigung, automatischem Auskuppeln im ABS-Fall sowie Übernahme durch manuelles Kuppeln entspricht im wesentlichen der Funktion
der Fig. 6 mit dem Unterschied allerdings, daß hier bei
der manuellen Kupplungsübernahme wie bei dem Ausführungsbeispiel der Fig. 3 der Servokolben (dies ist stets
der Kolben, der beim automatischen Kuppeln im ABS-Fall
durch die Ventilumschaltung dem Druck der Druckversorgung P ausgesetzt ist) durch die vom Fußpedal aufgebrachte Kraft zurückgeschoben werden muß, damit das
Kupplungspedal 1a in die den Schalter 16' aktivierende
Endposition gebracht werden kann. Hierdurch ergibt sich der Vorteil, daß bei der Betätigung des Endschalters,
was auch, wie weiter unten noch erläutert wird, durch
den Servokolben erfolgen kann, die automatische Betätigung aufgehoben ist und eine völlig ruckfreie Übernahme zum späteren sicheren Einkuppeln gewährleistet
ist. Der Kolben 46" bei Fig. 7 befindet sich nämlich
dann, wenn der Endschalter 16' anspricht, wieder in der
in der Fig. 7 dargestellten Position, der Kupplungsdruck wird von dem im hydraulischen Kreis I erzeugten
Druck egalisiert und das Wegschalten des auf den Servokolben wirkenden Druck der Druckversorgung P hat in
dieser Position keinen Einfluß mehr.

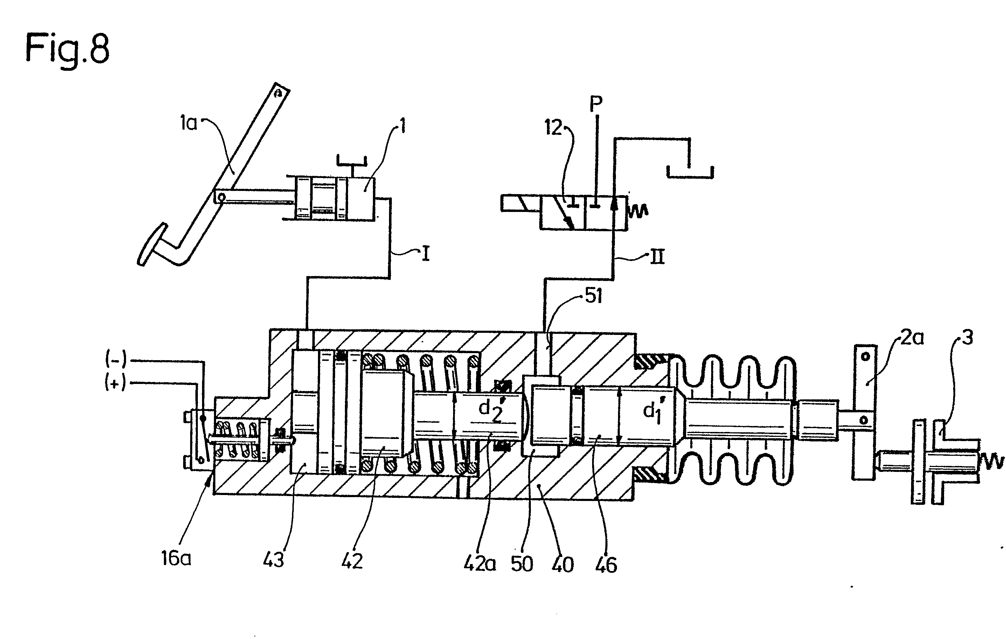

Das Ausführungsbeispiel der Fig. 8 entspricht in seinem
grundsätzlichen Aufbau im wesentlichen der Ausführung
der Fig. 6, daher sind auch für die gleichen Teile die
gleichen Bezugszeichen verwendet, mit dem lediglichen
Unterschied, daß der Durchmesser d2' des Kolbenstößels
42a' kleiner als der Durchmesser d1' des hier die Funktion des Servokolbens erfüllenden Kolbens 46' ist, so
daß, wie erkennbar, bei der Übernahme durch manuelles
Kuppeln entgegen der vollen Pedalrückwirkung bei Fig. 6
bei der Darstellung der Fig. 8 mit einer reduzierten
Pedalrückwirkung zu rechnen ist, da der Druck der
Druckversorgung P auf eine geringere Fläche des Kolbens
42' wirkt.

Ferner ist noch unterschiedlich, daß, was ohnehin
wahlweise geschehen kann, hier anstelle des pedalbetätigten Endschalters der Druckschalter 16 der Fig. 5
Verwendung findet. Betrachtet man die Ausführungsbeispiele der Figuren 5 bis 8, dann ergibt sich bei diesen insgesamt der geringste bauliche Aufwand und daher auch eine erhebliche Kostengünstigkeit, wobei bei der Fig. 5 ein sicheres Schalten durch geringe Pedalkraft gewährleistet ist, bei Einstellung des Druckschalters so, daß dieser unterhalb der maximalen Kupplungskraft schaltet.

Der Vorteil der Figuren 6 und 7 demgegenüber besteht in der ruckfreien Übernahme der Kupplungskraft, während bei Fig. 8, wie schon erwähnt, sowohl eine reduzierte Pedalkraft ein sicheres Schalten gewährleistet, als auch eine nahezu ruckfreie Übernahme der Kupplungskraft möglich ist.

Ein Vorteil des bei einigen der Ausführungsformen verwendeten Druckschalters 16a ist noch darin zu sehen, daß durch mögliche wegabhängige Toleranzen bei den verwendeten elektrischen Schaltern nicht immer gewährleistet ist, daß bei Übernahme der Kupplungskraft, also Wegschalten der Druckversorgung, die beiden Kolben jeweils aneinanderliegen. Ein wegunabhängiges Schalten der Druckschalter stellt dies sicher; allerdings kann man bei wegabhängigen Schaltern ein entsprechendes Anliegen der Kolben durch elektrische Verzögerungsglieder erreichen.

Weitere Ausführungsbeispiele, bei denen das den Servokolben enthaltende Zwischenaggregat im Bereich des Kupplungsnehmerzylinders integriert ist, sind in den Figuren 9 und 10 dargestellt. Diese Ausführungsbeispiele der Figuren 9 und 10 zeigen ineinandergeschachtelte, vom Kupplungsgeberzylinder bzw. von der Druckversorgung beaufschlagte Kolben, wobei durch diese Teleskopbauweise in Einmedien- bzw. in Zweimedienausführung
(in diesem Fall ist eine Zwischenkammer für die Medientrennung vorgesehen) eine kompakte Ausführungsform, die
in vorteilhafter Weise auch kürzer baut.erzielt ist, so daß sich auch
hier eine erhebliche Kostengünstigkeit ergibt.

Bei der Darstellung der Fig. 9 (Einmedien-Ausführung)
ist das eine Innenbohrung zur Kolbenführung mit durchgehend gleichem Durchmesser aufweisende Gehäuse des
Kupplungsnehmerzylinders 2' mit 60 bezeichnet. In dem
Gehäuse 60, welches bei 61 einen Anschlag bildet, ist
ein erster Kolben 62 gleitverschieblich gelagert, der
mit dem in der Zeichenebene linken Gehäuseende einen
Druckraum 63 begrenzt, der dem hydraulischen Kreis I vom
Kupplungsgeberzylinder und Fußpedal (nicht gesondert
dargestellt) zugeordnet ist. Der Kolben 62 bildet etwa
mittig eine Ringausnehmung 62a, die beidseitig über
O-Ringdichtungen 64 gegenüber dem Druckraum 63 und einem
sich rechtsseitig anschließendem Federraum 65 abgedichtet ist, in welchem eine dort angeordnete Vorspannungsfeder 66 den Kolben 62 in seine Ausgangsposition drückt.
Der Federraum 65 ist durchsetzt von einem Ringvorsprung
62b des Kolbens 62, der sich mit einer Druckringfläche
62c gegenüber dem Gehäuse 60 nach außen fortsetzt und
einem beliebigen Kupplungsbetätigungshebel 67 oder
einem Kupplungsgestänge angrenzend gegenüberliegt.

Ferner weist der Kolben 62 eine zentrale Innenbohrung
62d auf, in welcher der zweite Kolben 68 als Servokolben gleitverschieblich gegen den Druck einer weiteren
Vorspannungsfeder 69 gelagert ist. Der Servokolben 68
begrenzt mit einem abgedichteten Kolbenkopf einen wei-

0231465

teren Druckraum 70 im ersten Kolben 62 und erstreckt sich mit einer kolbenstangenartigen Verlängerung 68a innerhalb des Ringvorsprungs 62b des ersten Kolbens 62 ebenfalls unter Bildung eines äußeren Druck- oder Kontaktbereichs 68b nach außen angrenzend zum Kupplungsbetätigungshebel 67. Der Druckraum 70 innerhalb des ersten Kolbens 62 ist über eine Einlaßöffnung 71 mit dem hydraulischen Kreis II der Druckversorgung P verbunden und mündet in die Ringausnehmung 62a des Kolbens 62, die eine vorgegebene axiale Erstreckung aufweist, so daß über eine Zwischenbohrung 72 die Verbindung des hydraulischen Kreises II mit dem Druckraum 70 bei jeder Position des Kolbens 62 gewährleistet ist.

Die Wirkungsweise bei manuellem Kuppeln ist so, daß durch den hierdurch bewirkten Druckaufbau im Druckraum 63 der Kolben 62 in der Zeichenebene nach rechts verschoben wird und den Kupplungsbetätigungshebel 67 mitnimmt, wobei auch der in diesem Kolben gelagerte zentrale Servokolben 38 mitgenommen wird.

Bei automatischem Kuppeln im ABS-Fall verschiebt sich lediglich der zentrale Innenkolben 68 als Servokolben zur Betätigung des Kupplungsbetätigungshebels 67, während bei Übernahme aus dem automatischen Kupplungszustand durch manuelles Kuppeln der erste Kolben 62 den Servokolben 68 sozusagen einholt, hierbei aber gegen den vollen Versorgungsdruck gearbeitet werden muß, so daß bei Erreichen einer vorgegebenen Endposition durch das Kupplungspedal (dies kann erfaßt sein durch elektrischen Endschalter 16', durch Druckschalter, angeschlossen an den Druckraum 63, oder durch vom Weg des Kolbens 62 abhängigen Lageschalter – ähnlich wie in Fig. 1 bei 16
dargestellt) und hierdurch bewirktem Wegschalten der
Servokraft die Übernahme der Kupplungskraft ebenfalls
völlig ruckfrei erfolgt.

Soll eine Beaufschlagung der Druckräume durch unterschiedliche Medien erfolgen, dann ist eine zusätzliche
Kammer zur Medientrennung vorgesehen, die bei dem Ausführungsbeispiel der Fig. 10 mit 73 bezeichnet ist; diese zusätzliche, als Ringausnehmung im Kolben 62' ausgebildete Medientrennungskammer verfügt über eine End-
und Belüftungsbohrung 74; es ist daher ferner noch eine
zusätzliche O-Ring-Dichtung 75 im ersten Kolben 62' erforderlich. Die restlichen Komponenten und auch die Wirkungsweise sind identisch mit dem Ausführungsbeispiel
der Fig. 9, so daß, bei gleichen Bezugszeichen, hierauf
nicht weiter eingegangen zu werden braucht.

Die Ausführungsform in den folgenden Figuren 11 bis 15
stellen Möglichkeiten dar, das Zwischenaggregat, welches für die Servodruckversorgung zum Auskuppeln und
den automatischen Kupplungsvorgang zuständig ist, in
den Bereich des Kupplungsgeberzylinders zu verlagern,
so daß sich auch auf diese Weise eine erhebliche Vereinfachung im Bauaufwand und insbesondere auch deshalb ergibt, weil im Gegensatz zu einem zwischen dem Kupplungsgeber- und dem Kupplungsnehmerzylinder angeordneten
Zwischenaggregat der in diesem Fall erforderliche Verrohrungsaufwand entbehrlich ist. Auch hier ergibt sich
daher eine erhebliche Kostengünstigkeit der vorgeschlagenen Lösung.

Bei dem Ausführungsbeispiel der Fig. 11 entfällt daher
der bisher als I bezeichnete hydraulische, durch das
Treten des Kupplungspedals einen Druck aufbauende Kreis
völlig, da bei allen folgenden Ausführungsbeispielen
das Kupplungspedal 1a unmittelbar über eine an ihm angelenkte Kupplungsdruckstange die erforderliche Kolbenverschiebung bewirkt. Es sind aber ebenfalls zwei getrennte hydraulische Kreise vorgesehen, nämlich der
hydraulische Kreis II, der über das im ABS-Falle ansprechende 3/2-Wegemagnetventil 12 läuft und der hydraulische Ausgangskreis I', der den in seiner Funktion entsprechend erweiterten Kupplungsgeberzylinder mit dem
Kupplungsnehmerzylinder 2 verbindet, der seinerseits
über das Gestänge 2a auf die Kupplung 3 einwirkt.

Der direkt auf den Kupplungsnehmerzylinder 2 wirkende
Geberzylinder 1' hat ein Gehäuse 80, in dessen Bohrung
81 ein Stufenkolben 82 gleitverschieblich gelagert ist,
der eine Schnüffeldichtmanschette 9" sowie weitere
Dichtringe 84, 85 und 86 aufweist. Funktion und Aufbau des Kolbens 82 in diesem Bereich der Schnüffeldichtmanschette entspricht in etwa der rechten Seite der
Darstellung der Fig. 4 mit gleicher Funktion, so daß
hierauf nicht weiter eingegangen zu werden braucht -
es sind die gleichen Bezugszeichen mit einem zusätzlichen Beistrich oben verwendet. Zur Medientrennung ist
hier allerdings ein zum Druckmittelbehälter 28' der
Druckversorgung P getrennter Druckmittelbehälter 83
vorgesehen. Der gesamte einstückige Stufenkolben 82
wird von der Druckfeder 26' in der in Fig. 11 gezeichneten Stellung gehalten, wobei die Kupplungsdruckstange
87 vom Kolben 82 kugelförmig aufgenommen ist. Auch hier

- 28 -

wird wieder der Kreis II mit Mineralöl durch die vorhandene Druckversorgung P und der Kreis I' mit Bremsflüssigkeit betrieben. Der Raum zwischen den beiden,
durch die Dichtungen 84 und 85 getrennten Medien ist
durch eine eigene Bohrung 88 entlüftet. Der das Rückschalten des im ABS-Fall ansprechenden Magnetventils
12 bewirkende elektrische Schalter ist hier wieder als
Schalter 16' angrenzend zum Kupplungsfußpedal 1a und
daher durch dieses betätigt angeordnet.

Beim manuellen Kuppeln wird der Kolben 82 mechanisch
durch die Druckstange 87 in der Zeichenebene nach rechts
verschoben, wodurch die Schnüffeldichtmanschette 9"
die Schnüffelbohrung 27' verschließt und über den
Druckraum 25' der vom Geberzylinder 1' erzeugte Druck
auf den Kupplungsnehmerzylinder 2 wirkt. Das Ventil 13
befindet sich dabei in der Position a.

Bei automatischem Kuppeln schaltet das Magnetventil 12
in die Position b, so daß der im hydraulischen Kreis II
dann herrschende Druck der Druckversorgung P auf die
Ringfläche 82a des Kolbens 82 einwirkt und diesen nach
rechts gegen den Nehmerzylinder 2 verschiebt.

Soll bei automatischem Kuppeln die Übernahme durch manuelles Kuppeln erfolgen, dann rückt beim Treten des
Kupplungspedals 1a die Druckstange 87 dem weggelaufenen
Stufenkolben 82 nach, wobei der Widerstand auf das
Kupplungspedal relativ gering ist. Wie üblich betätigt
das Pedal dann kurz vor Hubende den elektrischen Kontaktschalter 16' und das Ventil 12 geht in die Stellung
a bei sofortiger Rückwirkung der vollen Kupplungskraft auf das Kupplungspedal und damit den Fuß der Betätigungsperson. Es kann dann manuell entkuppelt werden. Bei dieser praktisch rückwirkungsfreien Betätigung des Kupplungspedals bei Übernahme durch manuelles Kuppeln ergibt sich, wie auch bei den vorherigen Ausführungen der Vorteil einer sicheren Betätigung des oder der Endschalter mit der Folge einer schlagartigen Einwirkung der Kupplungskraft auf das Fußpedal nach Wegschalten der automatischen Betätigung, so daß auch hier, falls gewünscht, eine Änderung durch geeignete Verzögerungsglieder oder durch Anordnung eines Druckschalters als Endschalter, wie weiter vorn schon erwähnt, möglich ist, wodurch in der Endlage die Pedalkraft angehoben werden kann.

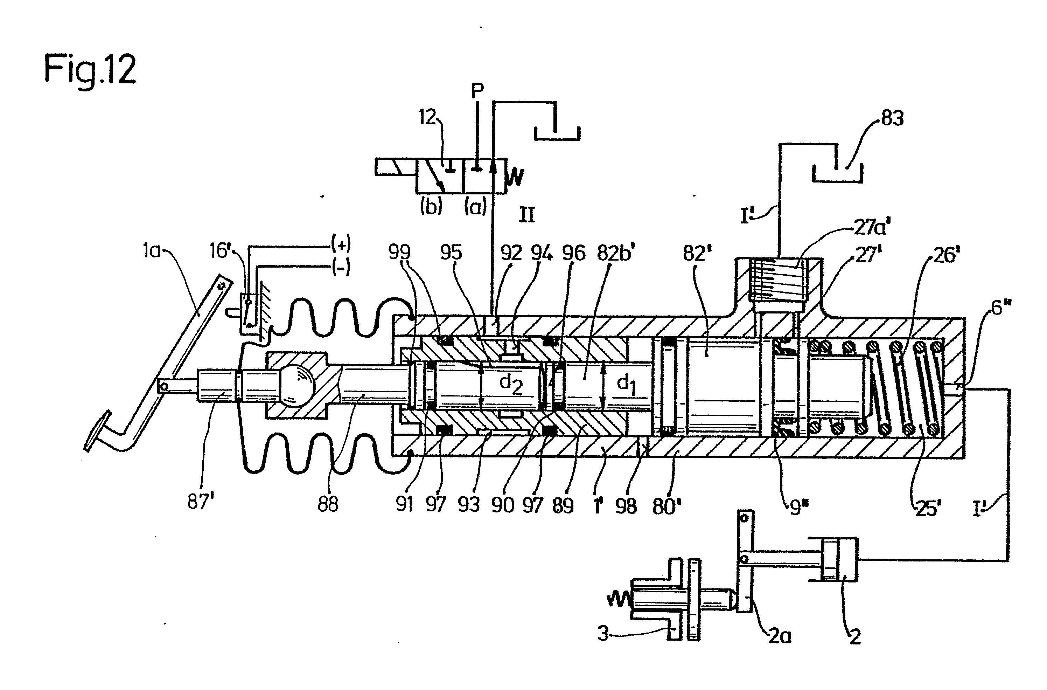

Will man diesen Notwendigkeiten sofort ausweichen, dann kann entsprechend der Darstellung der Fig. 12 eine Zweiteilung des Kolbens wie gezeigt vorgenommen werden, beispielsweise indem von der Druckstange 87'des Kupplungsfußpedals 1a betätigt ein eigener kleiner Kolben 88 in Form eines Druckbolzens gebildet ist, der in einer separaten Innenbuchse 89 oder in einer entsprechend verjüngten Bohrung des Gehäuses 80' des erweiterten Kupplungsgeberzylinders 1' gleitverschieblich gelagert ist. Der Druckbolzen 88 mit einem Durchmesser d2 entspricht in seinem Durchmesser dem Durchmesser d1 eines kolbenstangenartigen, ihm gegenüberliegenden Vorsprung 82b' des Kolbens 82', dessen Aufbau ab Einmündungsbereich der Druckmittelversorgung vom Behälter 83, also auf Höhe der Schnüffeldichtmanschette 9" mit Aufbau und Funktion der Darstellung der Fig. 11 identisch ist, so daß hierauf nicht weiter eingegangen zu werden braucht - es sind auch die gleichen Bezugszeichen verwendet.

Die in der Buchse 89 gleitverschieblich gelagerten
Durchmesser d1 und d2 des Kolbens 82' und des Druckbolzens oder Teilkolbens 88 sind durch Dichtringe 90 und
91 abgedichtet, wobei über einen Gehäuseeinlaß 92 mit
Ringausnehmung 93 in der Buchse 89, weiterem Querkanal
94 in der Buchse und einer Nut 95 im Druckbolzen 88
ein Druckraum 96 für die Druckversorgung P zwischen den
beiden Durchmessern d1 und d2 gebildet ist. Die Buchse
89 ist selbst über weitere Dichtungen 97 gegen die Gehäusebohrung abgedichtet, mit einer Entlüftungsbohrung
98. Zur Anschlagbildung können bei 99 noch Sprengringe
oder ähnliche Arretiermittel als Innenringe in der Bohrung des Gehäuses bzw. der Buchse angeordnet sein.

Während beim normalen manuellen Kuppeln der Druckbolzen
88 unmittelbar auf den Kolben 82' wirkt und sich hierdurch die erforderliche Druckerhöhung im Druckraum 25'
zum Kupplungsnehmerzylinder 2 ergibt, wird bei einem
automatischen Kupplungsvorgang aufgrund Umschalten des
3/2-Wegeventils 12 der Versorgungsdruck im Druckraum 96
wirksam und drückt die beiden Durchmesser d1 und d2
auseinander, also den Druckbolzen 88 bis an seinen rückwärtigen Anschlag und den Kolben 82' nach rechts zur
Druckerhöhung im Druckraum 25' mit sich hierdurch ergebender Kupplungsbetätigung.

Man erkennt, daß bei einem solchen Aufbau die Übernahme
durch manuelles Kuppeln mit voller Pedalrückwirkung
erfolgt, denn bei gleichen Durchmessern d1 = d2 muß das Kupplungspedal 1a gegen den Druck der Druckversorgung P (also die volle Kupplungskraft) bewegt werden.
Der die Umschaltung des Ventils 12 auslösende Schalter
ist als elektrischer Wegschalter 16' der Kupplungspedalbetätigung zugeordnet, er kann jedoch auch, wie weiter
vorn schon erwähnt, als Druckschalter oder als von der
Kolbenbewegung betätigter Schalter ausgebildet sein.

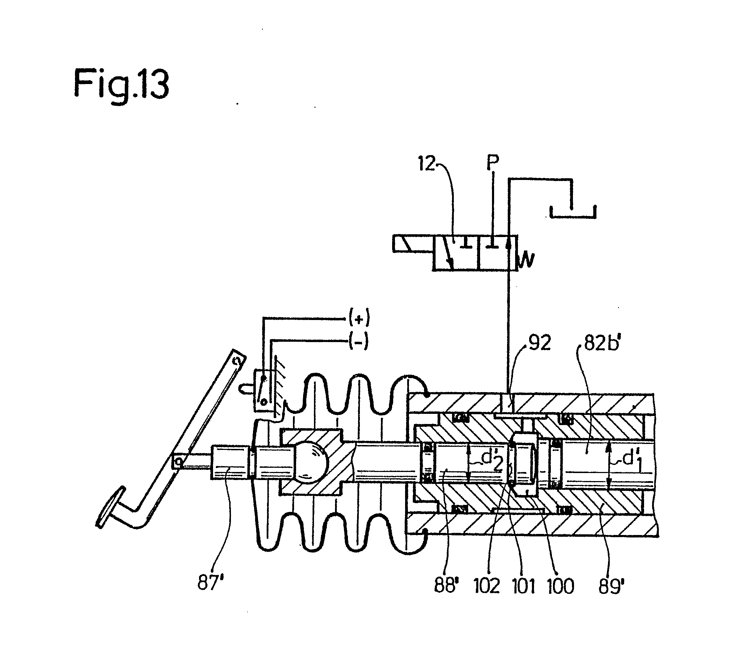

Schließlich ist es möglich, entsprechend dem Ausführungsbeispiel der Fig. 13 die beiden Durchmesser $d_1'$ und
$d_2'$ unterschiedlich auszubilden, so daß $d_2' < d_1'$ ist
und daher die Pedalrückwirkung entsprechend reduziert
wird - es ergeben sich hierbei in etwa gleiche Verhältnisse wie bei der Ausführungsform der Fig. 8, wobei die
restlichen Komponenten der Darstellung der Fig. 12 entsprechen und daher auch nicht weiter angegeben sind. In
diesem Fall sind die die unterschiedlichen Durchmesser
$d_1'$ und $d_2'$ aufnehmenden Bohrungen in der Buchse 89' unterschiedlich, wobei die den Druckraum zwischen den beiden Durchmessern bildende Ausnehmung 100 nach außen
ringförmig erweitert ist und der Anschlag für den
Druckbolzen 88' beispielsweise ebenfalls als Sprengring 101 in einer Ringnut 102 des Druckbolzens mit
Durchmesser $d_2'$ dort angeordnet ist, wo der Druckraum
100 in die Führungsbohrung für den Druckbolzen 88' übergeht.

Während sich daher bei der Ausführungsform  der Fig. 12
als Vorteil wieder die ruckfreie Übernahme der Pedalkraft ergibt, nimmt das Ausführungsbeispiel der Fig. 13
eine Mittelstellung zwischen den Figuren 11 und 12 ein,
da durch reduzierte Pedalrückwirkung ein sicheres

0231465

Durchtreten bis in die Endlage und damit auch das sichere Betätigen des elektrischen Schalters gewährleistet
ist, bei nahezu ruckfreier Übernahme der Kupplungskraft.

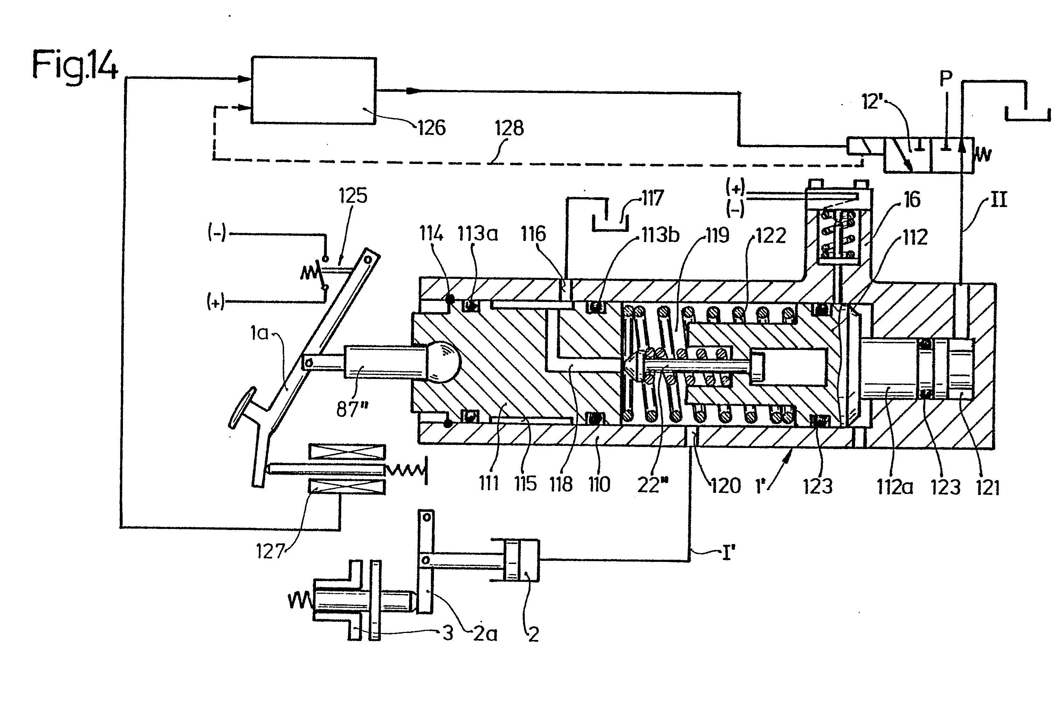

Ein weiteres Ausführungsbeispiel vorliegender Erfindung,
welches auch genauer auf die Möglichkeiten einer elektrischen oder elektronischen Beeinflussung der jeweiligen
Kolbenstellungen, des Kupplungs-Übernahmezeitpunkts
u. dgl. gerichtet ist, ist in Fig. 14 dargestellt. Auch
dieses Ausführungsbeispiel geht im Grundprinzip aus
von einem erweiterten Kupplungsgeberzylinder 1', wobei
in dem Gehäuse 110 mit abgesetzter Bohrung zwei Kolben,
nämlich ein erster Kolben 111, der vom Kupplungsfußpedal betätigbar ist, und ein zweiter Kolben 112 als
Servokolben gleitverschieblich gelagert sind. Der erste
Kolben 111 mit jeweils einer endseitigen Dichtung 113a,
113b ist unmittelbar mechanisch vom Kupplungsfußpedal
1a über eine Druckstange 87" betätigt, die in einer
zugewandten Öffnung des Kolbens 111 kugelgelagert ist.
Es versteht sich, daß in diesem Bereich, wie auch bei
den anderen Ausführungsbeispielen, eine entsprechende
Dichtmanschette vorgesehen sein kann. Der Endanschlag
für den Kolben 111 wird beispielsweise von einem Sprengring 114 gebildet. Der Zwischenraum zwischen den beiden
Dichtungen 113a, 113b umfaßt eine Ringausnehmung 115,
die über eine Entlüftungsöffnung 116 mit einem Druckmittelbehälter 117 sowie über innere Kolbenkanäle 118
mit einem zentralen Druckraum 119 verbunden ist.

Der zentrale Druckraum 119 steht mit dem Hydraulikkreis I' zur Betätigung des Kupplungsgeberzylinders 2
über eine Auslaßöffnung 120 in Verbindung und wird auf der anderen Seite begrenzt von dem Servokolben 112, dessen im Durchmesser verjüngtes, rückwärtiges Kolbenendstück 112a mit der zugeordneten Gehäusebohrung einen Druckraum 121 des hydraulischen Kreises II begrenzt, dem über das im ABS-Fall ansprechende Magnetventil 12' der Druck der Druckversorgung P zugeführt ist.

Eine sich an beiden Kolben abstützende Druckfeder 122 im zentralen Druckraum 119 hält die beiden Kolben in der in der Fig. 14 gezeigten Position, wobei im Kolben 112 ein schon aus den Darstellungen der Figuren 2 oder 3 bekanntes Zentralventil 22" gelagert ist, welches die Austrittsöffnung des Kanals 118 im Kolben 111 in den Druckraum 119 dann verschließt, wenn zum automatischen Kuppeln der Servokolben 112 sich nach Umschaltung des Magnetventils 12' in der Zeichenebene nach links bewegt. Zur Medientrennung weist der Servokolben 112 zwei weitere Dichtungen 123 auf.

Geht man davon aus, daß auch hier zunächst lediglich ein elektrischer Endlagenschalter 16 vorgesehen ist, der nach Aufbau und Funktion dem in Fig. 1 mit dem gleichen Bezugszeichen dargestellten, kolbenbetätigten Schalter entspricht, dann ergibt sich die Grundfunktion, daß bei manueller Betätigung des Kupplungspedals 1a dieses über die Druckstange 87" den ersten Kolben 111 in der Zeichenebene nach rechts verschiebt, das Zentralventil 22" verschließt den Kanal 118 zum Druckmittelbehälter und aufgrund des im Raum 119 sich ergebenden Druckaufbaus ergibt sich die Kupplungsbetätigung über den Hydraulikkreis I'.

Die automatische Kupplungsbetätigung im ABS-Fall erfolgt
durch eine entsprechende Ansteuerung des Magnetventils
12' mit Druckaufbau im Druckraum 121, wobei sich dann
der Servokolben 112 in der Zeichenebene nach links verschiebt, das Zentralventil ebenfalls den Kanal 118 abdichtet und auf die gleiche Weise ausgekuppelt wird.

Bei Übernahme durch manuelles Kuppeln muß dann der Servokolben durch die Fußkraft zurückgeschoben werden, so daß
bei Betätigung des Endschalters 16 durch diesen Kolben
die automatische Betätigung auch dann völlig aufgehoben
ist, wenn Kupplungsverschleiß auftritt. Hierdurch ergibt
sich stets ein sicheres Einkuppeln und die bei diesem
Grundprinzip sich ergebende, völlig ruckfreie Übernahme.

Ergänzend hierzu sind in der Darstellung der Fig. 14
noch Ausgestaltungen angegeben, die in gleicher Weise
auf die weiter vorn gemachten Ausführungsbeispiele anwendbar sind, nämlich zunächst ein weiterer Schalter 125,
der beispielsweise kupplungspedalbetätigt sein kann
und so ausgelegt ist, daß er ein Schaltsignal bei Beginn einer Kupplungsbetätigung abgibt.

Eine solche Anordnung von zwei verschiedenen Schaltern
in im übrigen grundsätzlich beliebiger Ausführungsform
als mechanisch betätigter elektrischer Schalter, Druckschalter oder durch Kolbenbewegung betätigter Schalter,
von denen der eine am Anfang der Kupplungspedalbewegung
bei manueller Übernahme geschaltet wird und der andere
eine eingenommene Endposition signalisiert, ermöglicht
bei an sich beliebiger Betätigung eine problemlose manuelle Übernahme. Der die Anfangsbewegung angebende Schalter signalisiert einer geeigneten elektrischen Logikschaltung oder Elektronik, die in Fig. 14 nicht gesondert dargestellt ist, daß der Fahrer die Kupplungsbetätigung übernehmen möchte. Hingegen signalisiert der zweite (End-)Schalter 16, daß der Fahrer die Kupplung bis nahezu in die Endlage gebracht hat und jetzt übernehmen kann. Bei allen Pedalpositionen zwischen den beiden Schaltersignalen kann dann die Logikschaltung verhindern, daß automatisch wieder eingekuppelt wird, beispielsweise indem man die beiden Signale einem UND-Glied zuführt, welches erst beim Vorliegen auch des vom zweiten (End-)Schalter 16 gelieferten Signals die Wegschaltung des Versorgungsdrucks freigibt und auch veranlaßt, zwischen den beiden Signalen jedoch die Umschaltung des Magnetventils 12' auch dann sperrt, wenn aus übergeordneten Gründen von der ABS-Regelung her automatisch wieder eingekuppelt werden soll. Hierdurch werden Schläge durch die Kupplungskraft auf das Kupplungsfußpedal 1a verhindert.

Eine weitere Ausgestaltung der Erfindung besteht bei Zugrundelegung zunächst beliebiger Ausführungsformen entsprechend den Figuren 1 bis 14 darin, daß ergänzend zu dem den Beginn der manuellen Übernahme signalisierenden Schalter 125 dem Kupplungsfußpedal ein Weggeber zugeordnet wird, was anhand der Darstellung der Fig. 14 erläutert wird.

Ein solcher Weggeber, der die Stellung des Pedals in jeder Lage mißt und beispielsweise als analoges Signal einer Vergleichselektronik 126 zuführt, ist in Fig. 14 mit 127 bezeichnet.

Es ist dann auch sinnvoll, das Magnetventil 12' entweder als Proportionalventil (elektrisch ansteuerbar) oder
als sogenanntes taktendes Magnetventil auszubilden, so
daß jedenfalls nicht schlagartig zwischen vollem Druck
und entlüftetem Zustand umgeschaltet wird. Der Vergleichselektronik 126 ist dann noch eine Information
darüber zugeführt, ob sich zu einem gegebenen Zeitpunkt
ein automatischer Kupplungsvorgang ereignet hat bzw.
noch andauert, was über eine Rückleitung 128 geschehen
kann, die den Schaltzustand des Magnetventils 12' erfaßt. Hier ist es aber auch möglich, andere Größen zur
Signalgabe noch einzubeziehen, beispielsweise den
Druck im hydraulischen Kreis I' zum Kupplungsnehmerzylinder 2 oder die Position des Servokolbens 112.

Wird dann während eines automatischen Kupplungsvorgangs
manuell gekuppelt, wenn also der Fahrer die Kontrolle
über den Antriebsstrang zum Motor übernehmen möchte,
und soll zum gleichen Zeitpunkt aus Gründen der ABS-
Regelung die automatische Betätigung weggeschaltet werden, dann erkennt die Elektronik die Lage des Fußpedals
1a über den Wegsensor 127 und beaufschlagt mit ihrem
Ausgangssignal den automatischen Bereich entsprechend
der Pedallage über das Proportionalventil oder das mit
getaktetem Signal angesteuerte Magnetventil so, daß
sich der auf den Servokolben ausgeübte Druck nicht
schlagartig abbauen kann. Die Übernahme durch das Kupplungspedal (manuelles Kuppeln) kann daher in jeder Pedallage praktisch ruckfrei erfolgen.

Dies geht so vor sich, daß der Kolben 111 (Geberkolben)
immer mehr Kupplungskraft übernimmt, während sich der Druck im Druckraum 121 auf den Servokolben 112 langsam abbaut. Die ruckfreie Übernahme bei manueller Übernahme ist daher in jeder Pedallage durch den langsamen Druckabbau im Servokolben möglich, so daß auch nicht bestimmte Betriebszustände vorliegen müssen, um die manuelle Kupplungsübernahme zu bewirken; es ist auch nicht erforderlich, daß das Kupplungsfußpedal bis auf eine vorgegebene Endlage zur Betätigung beispielsweise eines Endschalters gedrückt werden muß.Sämtliche Ausführungsbeispiele können daher in diesem Bereich so ausgelegt werden, daß ein Schalter 125 den Wunsch des Fahrers auf manuelle Kupplungsübernahme signalisiert und hierdurch die Ansteuerung des Magnetventils 12' freigegeben wird, mit der Maßgabe, daß diese Ansteuerung abhängig von der Position des Wegsensors 127 allmählich, insoweit also behutsam erfolgt zur ruckfreien Kupplungskraftübernahme. Der Schalter 16 wäre in diesem Fall entbehrlich. Gleichzeitig kann der Schalter 125, solange er betätigt ist, ein Sperrsignal setzen, damit nicht durch erneuten Eingriff aufgrund von ABS-Regelparameterndie Kupplung automatisch wieder gelöst wird.

Alle in der Beschreibung, den nachfolgenden Ansprüchen und der Zeichnung dargestellten Merkmale können sowohl einzeln als auch in beliebiger Kombination miteinander erfindungswesentlich sein.

1931/ot/wi
28.11.85

Firma Robert Bosch GmbH, 7000 Stuttgart 1

Patentansprüche

1. Vorrichtung bei mit einem Blockierschutzsystem (ABS) ausgerüsteten Kraftfahrzeugen o. dgl., bei denen beim Abbremsen über die Betriebsbremse und/oder durch Einsetzen von Motorbremsmoment im ABS-Fall ein automatisches Auskuppeln durch Ansteuerung mindestens eines ein Zylinder/Kolbenaggregat im Bereich des Kupplungsgeberzylinders und/oder des Kupplungsnehmerzylinders beaufschlagenden Mehrwege-Magnetventils durch die ABS-Funktionen erfolgt und ferner Mittel vorgesehen sind, die eine Übernahme der Kupplungsfunktion (Einkuppeln) bei einer willkürlichen (manuellen) Kupplungsbetätigung durch die Bedienungsperson ermöglichen, dadurch gekennzeichnet, daß das als separates Bauelement zwischen Geberzylinder (1) und Nehmerzylinder (2) angeordnete Zylinder/Kolbenaggregat die einzige hydraulische Anschlußverbindung zum Kupplungsnehmerzylinder bildet und mit beiden Zylindern (1, 2) lediglich über hydraulische Verbindungsleitungen unter Verzicht auf Magnetventile verbunden ist (Fig. 1 - 4).

2. Vorrichtung bei mit einem Blockierschutzsystem (ABS)
   ausgerüsteten Kraftfahrzeugen o. dgl., bei denen beim
   Abbremsen über die Betriebsbremse und/oder durch Einsetzen von Motorbremsmoment im ABS-Fall ein automatisches Auskuppeln durch Ansteuerung mindestens eines
   einem Zylinder/Kolbenaggregat im Bereich des Kupplungsgeberzylinders und/oder des Kupplungsnehmerzylinders beaufschlagenden Mehrwege-Magnetventils
   durch die ABS-Funktionen erfolgt und ferner Mittel
   vorgesehen sind, die eine Übernahme der Kupplungsfunktion (Einkuppeln) bei einer willkürlichen (manuellen) Kupplungsbetätigung durch die Bedienungsperson ermöglichen, dadurch gekennzeichnet, daß das
   von dem Mehrwege-Magnetventil (12) angesteuerte Zylinder/Kolbenaggregat baulich mit dem Kupplungsnehmerzylinder vereinigt ist und ein Teilkolben die Kupplungsbetätigung unmittelbar mechanisch bewirkt (Fig. 5 - 10).

3. Vorrichtung bei mit einem Blockierschutzsystem (ABS)
   ausgerüsteten Kraftfahrzeugen o. dgl., bei denen beim
   Abbremsen über die Betriebsbremse und/oder durch Einsetzen von Motorbremsmoment im ABS-Fall ein automatisches Auskuppeln durch Ansteuerung mindestens eines
   einem Zylinder/Kolbenaggregat im Bereich des Kupplungsgeberzylinders und/oder des Kupplungsnehmerzylinders beaufschlagenden Mehrwege-Magnetventils
   durch die ABS-Funktionen erfolgt und ferner Mittel
   vorgesehen sind, die eine Übernahme der Kupplungsfunktion (Einkuppeln) bei einer willkürlichen (manuellen) Kupplungsbetätigung durch die Bedienungsperson ermöglichen, dadurch gekennzeichnet, daß  das vom
   Magnetventil beaufschlagte Zylinder/Kolbenaggregat unmittelbar mit dem Kupplungsgeberzylinder baulich
vereinigt ist und bei mechanischer Verbindung eines
Kolbenteils mit dem Kupplungsfußpedal der Kupplungsnehmerzylinder (2) ausschließlich über eine hydraulische Verbindungsleitung (Kreis I') mit dem Zylinder/Kolbenaggregat verbunden ist (Figuren 11-14).

4. Vorrichtung nach Anspruch 1, dadurch gekennzeichnet,
   daß in dem Gehäuse (4a) des separaten, hydraulisch
   zwischen Kupplungsgeberzylinder (1) und Kupplungsnehmerzylinder (2) geschalteten Zylinder/Kolbenaggregats (4) ein abgestufter Kolben (19) gleitverschieblich gelagert ist, der an seinen beiden Endseiten mit dem Gehäuse Druckräume (18, 17) ausbildet,
   die einmal über das als 3/2-Wegemagnetventil ausgebildete Magnetventil (12) vom Druck der Druckversorgung (P) (Hydraulikkreis II) und zum anderen vom
   Kupplungsgeberzylinder (Hydraulikkreis I) beaufschlagt sind, wobei in einer Ausgangsposition des
   Kolbens (19) der Kupplungsnehmerzylinder (2) über
   den Druckraum (17) mit dem Kupplungsgeberzylinder
   (1) verbunden ist. (Fig. 1)

5. Vorrichtung nach Anspruch 4, dadurch gekennzeichnet,
   daß die    direkte Verbindung zwischen dem Kupplungsgeberzylinder (1) und dem Kupplungsnehmerzylinder (2) über den Druckraum (17) durch eine Verschiebung des Kolbens (19) unter dem Einfluß einer im
   ABS-Fall erfolgenden automatischen Ansteuerung des
   gegenüberliegenden Druckraums (18) durch das Magnetventil (12) unterbrochen wird (Schnüffeldichtmanschette 9), wodurch die gegebenenfalls gedrosselte Zuflußöffnung (14) vom Kupplungsgeberzylinder (1) zur
Einmündung in einen weiteren Druckraum (15) freigegeben ist.

6. Vorrichtung nach Anspruch 4 oder 5, dadurch gekennzeichnet, daß der weitere Druckraum (15) von einem
   federvorgespannten Ringkolben (21) begrenzt ist,
   der im Falle des automatischen Kupplungszustands
   (ausgekuppelt) unter dem vom Kupplungsgeberzylinder
   (1) manuell erzeugten Druck zur Übernahme gegen
   einen in der Endposition betätigbaren elektrischen
   Endschalter (16) verschiebbar ist, wodurch die
   Druckversorgung über das Magnetventil (12) von dem
   Zwischenaggregat (4) weggeschaltet wird.

7. Vorrichtung nach Anspruch 1 und einem der Ansprüche
   4-6, dadurch gekennzeichnet, daß vom Kupplungsgeberzylinder (1) eine hydraulische Zweigleitung (Ia)
   unmittelbar in die ausgangsseitige Druckkammer (17)
   des Zwischenaggregats (4) geführt ist, die im ABS-
   Fall (Druckbeaufschlagung des Kolbens 19 über das
   Magnetventil 12) von einem im Kolben (19) gelagerten Ventil (Zentralventil 22) verschließbar ist.
   (Fig. 2)

8. Vorrichtung nach Anspruch 1, dadurch gekennzeichnet,
   daß in dem Gehäuse (4a') des zwischen Kupplungsgeberzylinder (1) und Kupplungsnehmerzylinder (2) geschalteten Zwischenaggregats (4') zwei Kolben (vom
   Versorgungsdruck P betätigter Servokolben 20a  und
   vom Kupplungsgeberzylinder  1  betätigter Kolben
    20b ) angeordnet sind, die zwischen sich einen mit der hydraulischen Ausgangsleitung (24) zum Kupplungsnehmerzylinder (2) verbundenen Druckraum (23) bilden
und daß in dem vom Kupplungsgeberzylinder auf seiner
einen Seite beaufschlagten Kolben (20b) ein interner
Durchlaßkanal (22) vorgesehen ist, der von einem im
anderen Kolben (20a) gelagerten Zentralventil (22')
im automatischen ABS-Fall verschlossen ist derart,
daß zur manuellen Übernahme bei Betätigung des Kupplungsfußpedals (1a) mit voller Pedalrückwirkung dieses
gegen den Druck der Druckversorgung (P) solange zu
verschieben ist, bis ein Endschalter (16, 16') anspricht und den auf den Servokolben (20a) einwirkenden Versorgungsdruck über das Magnetventil (12)
wegschaltet. (Fig. 3)

9. Vorrichtung nach Anspruch 1 und einem der Ansprüche
   4-8, dadurch gekennzeichnet, daß zwei Teilkolben
   (Servokolben 20a'; vom Kupplungsfußpedal über den
   Kupplungsgeberzylinder 1 betätigter Kolben 20b') hintereinander liegend im Gehäuse (4a') des zwischengeschalteten Zylinder/Kolbenaggregats (4) so angeordnet sind, daß zwischen den beiden Kolben ein erster,
   mit dem Kupplungsgeberzylinder (1) verbundener
   Druckraum (31)(hydraulischer Kreis I), auf der
   Druckseite des Servokolbens (20a') ein vom Druck der
   Druckversorgung (P) beaufschlagter Druckraum und
   auf der abgewandten Seite des ersten Kolbens (20b')
   der mit dem Kupplungsnehmerzylinder (2) verbundene
   Druckraum (25) angeordnet ist, der über eine
   Schnüffelbohrung (27) mit zugeordneter Schnüffeldichtmanschette (9) mit einem Druckmittelvorratsbehälter verbunden ist, wobei ferner ein in einer vorgegebenen Endlage des Kupplungsfußpedals (1a) angeordneter elektrischer Endschalter (16') vorgesehen
ist, der den Versorgungsdruck vom Servokolben (20a')
wegschaltet, derart, daß zur manuellen Übernahme
der Servokolben (20a')durch die Fußkraft zurückgeschoben und bei Ansprechen des Endschalters (fußpedalbetätigter Endschalter 16') durch völlige Aufhebung der automatischen Betätigung eine ruckfreie
Übernahme der Kupplungskraft gewährleistet ist.
(Fig. 4)

10. Vorrichtung nach Anspruch 2, dadurch gekennzeichnet,
daß im modifizierten Gehäuse (40) des Kupplungsnehmerzylinders (2') in durch eine Trennwand (48) geteilten Führungskammern hintereinandergeschaltet ein
erster, vom Kupplungsgeberzylinder (1) über den ersten hydraulischen Kreis (I) betätigter Zylinder (42)
und mit diesem über eine abgedichtete, die Trennwand
(48) durchsetzende Kolbenverlängerung (45a) bei
Druckeinwirung verbundener zweiter Kolben (Servokolben 46) angeordnet sind, der unmittelbar über eine
kolbenstangenartige Verlängerung (46a) mit dem Kupplungsbetätigungsgestänge (2a) in Verbindung steht,
derart, daß bei Übernahme durch manuelles Kuppeln
der erste Kolben (42) dem Servokolben (46) mit geringem Kraftaufwand am Kupplungsfußpedal nachläuft,
bis bei Erreichen einer vorgegebenen Position und/
oder eines vorgegebenen Drucks (Druckschalter 16a
im Druckraum 43) durch Ansteuerung des Magnetventils (12) die Druckversorgung vom Servokolben (46)
weggeschaltet wird mit sich hierdurch ergebender
schneller Rückwirkung der Kupplungskraft auf das

0231465

Fußpedal. (Fig. 5)

11. Vorrichtung nach Anspruch 2 und Anspruch 10, dadurch
    gekennzeichnet, daß die beiden im Gehäuse (40') des
    Kupplungsnehmerzylinders (2') angeordneten Kolben
    (42' und Servokolben 46') mit ihren zugewandten Flächen einen in den durch das Magnetventil (12) mit
    Druck beaufschlagten hydraulischen Kreis (II) geöffneten Druckraum (50') mit gleichen Durchmessern
    (d1 = d2) begrenzen, derart, daß bei Betätigung
    des Kupplungsgeberpedals durch die sich hierdurch
    ergebende Druckerhöhung in dem dem ersten Kolben (42')
    zugeordneten Druckraum (43) die volle Pedalrückwirkung der Servodruckkraft aus dem gemeinsamen Druckraum (50') rückwirkt, bis ein das Magnetventil (12)
    ansteuernder Endschalter (16') anspricht   (Fig. 6).

12. Vorrichtung nach Anspruch 2 und einem der Ansprüche
    9-11, dadurch gekennzeichnet, daß die unter Wegfall
    einer Trennwand im gemeinsamen Gehäuse (40") hinter-
    einandergeschaltet angeordneten Kolben (erster Kol-
    ben 42" und Servokolben 46") zwischen sich einen
    mit dem vom Kupplungsgeberzylinder (1) beaufschlagten hydraulischen Kreis (I) verbundenen Druckraum
    (50") bilden derart, daß bei manueller Kupplungsübernahme der Servokolben mit voller Pedalrückwirkung bis zum Ansprechen eines elektrischen Endschalters (16') bei Betätigung des Kupplungsfußpedals
    (1a) zurückzuschieben ist. (Fig. 7)

13. Vorrichtung nach Anspruch 11, dadurch gekennzeichnet, daß die beiden den gemeinsamen Druckraum (50')

0231465

begrenzenden Kolben unterschiedliche Durchmesser
(d1' > d2') aufweisen und der elektrische Endschalter   ein   abhängig vom im mit dem Kupplungsgeberzylinder (1) verbundenen Druckraum (43) herrschenden Druck schaltender Druckschalter (16a) ist.
(Fig. 8)

14. Vorrichtung nach Anspruch 2 und einem oder mehreren
    der Ansprüche 9-14, dadurch gekennzeichnet, daß in
    dem Gehäuse (60) des Kupplungsnehmerzylinders (2')
    zwei teleskopartig ineinandergebaute Kolben (erster
    Kolben 62, Servokolben 68) angeordnet sind, die beide mit Verlängerungen mechanisch auf einen äußeren
    Kupplungsbetätigungshebel (67) einwirken. (Fig. 9)

15. Vorrichtung nach Anspruch 14, dadurch gekennzeichnet,
    daß der Servokolben (68) in einer axialen Ausnehmung
    (62d) des ersten Kolbens (62) gleitverschieblich
    unter Federvorspannung gelagert ist und mit letzterem einen über das Magnetventil (12) mit der Druckversorgung (P) verbundenen Druckraum (70) bildet.
    (Fig. 9)

16. Vorrichtung nach Anspruch 14 oder 15, dadurch gekennzeichnet, daß der erste Kolben (62') bei teleskopartig ineinandergeschachtelten erstem und Servokolben
    (68) zur Medientrennung in einer Verlängerung eine
    über eine Gehäuseöffnung (74) entlüftete und beidseitig abgedichtete (Dichtungen 64) Ringausneh-
    mung (73) aufweist. (Fig. 10)

17. Vorrichtung nach Anspruch 3, dadurch gekennzeichnet, daß ein einstückiger Stufenkolben (82) im Gehäuse
(80) des Kupplungsgeberzylinders (1') gelagert ist
und einen vorderen, durch ein Schnüffelloch (27')
mit einem Druckmittelbehälter (83) verbundenen und
über eine Schnüffeldichtmanschette (9") abgedichteten Druckraum (25') bildet, der mit dem Kupplungsnehmerzylinder (2) (hydraulischer Kreis I') verbunden
ist und wobei der Kolben an seinem gegenüberliegenden Endbereich eine Druckringkammer (82a) begrenzt,
die über das Magnetventil (12) mit dem Druck der
Druckversorgung (P) verbunden ist (hydraulischer
Kreis II) und gleichzeitig mechanisch durch eine
Druckübertragungsstange(87) an das Kupplungspedal
(1a) angelenkt ist derart, daß zur manuellen Kupplungsübernahme das Kupplungspedal mit geringer Pedalrückwirkung dem unter der Einwirkung des Druckversorgungsdrucks weggelaufenen Kolben nachgeführt
wird bis zum Ansprechen eines elektrischen Endlagenschalters (16') und der hierdurch erfolgenden
Wegschaltung des Versorgungsdrucks über das Magnetventil (12) und der sich hierdurch ergebenden
schlagartigen Rückwirkung der Kupplungskraft auf
das Fußpedal.(Fig. 11)

18. Vorrichtung nach Anspruch 3 und 17, dadurch gekennzeichnet, daß ein mechanisch vom Kupplungsfußpedal
(1a) betätigter Teilkolben (Druckbolzen 88) gleitverschieblich und abgedichtet im Gehäuse (80') des
Kupplungsgeberzylinders (1') geführt ist (Lagerung
durch Buchse 89) und mit einem vorspringenden Gegenstück (82b') des Servokolbens (82') einen Druckraum (96) begrenzt, der durch Querkanäle (92, 94), Ringausnehmungen (93) und Längsnuten (95) über das
Magnetventil (12) mit dem Druck der Druckversorgung
(P) beaufschlagbar ist, wobei der Servokolben (82')
bei Betätigung die Druckmittelzuführung (Schnüffelloch 27') zu einem vorderen Druckraum (25') überfährt derart, daß bei manueller Kupplungsübernahme
eine volle Pedalrückwirkung des Drucks der Druckversorgung bis zum Ansprechen eines elektrischen Endschalters (16') wirksam ist.

19. Vorrichtung nach Anspruch 18, dadurch gekennzeichnet,
daß die Durchmesser (d1, d2) der beiden den zentralen Druckraum (96) begrenzenden Kolbenteile (88, 82b')
gleich sind. (Fig. 12)

20. Vorrichtung nach Anspruch 18, dadurch gekennzeichnet,
daß die beiden den zentralen Druckraum (100) begrenzenden Kolbenteile (88', 82b') in ihrem Durchmesser
(d1', d2') ungleich sind, derart, daß die Übernahme
einerseits nahezu ruckfrei, andererseits mit reduzierter Pedalrückwirkung zur sicheren Betätigung
des elektrischen Endschalters erfolgt. (Fig. 13)

21. Vorrichtung nach Anspruch 3 und einem oder mehreren
der Ansprüche 17 bis 20, dadurch gekennzeichnet, daß
die beiden im Gehäuse (110) des Kupplungsgeberzylinders (1') gelagerten Kolben (111, Servokolben 112)
einen mittleren Druckraum (119) begrenzen, der mit
dem Kupplungsnehmerzylinder (2) (hydraulischer
Kreis I') verbunden ist und endseitig einmal mechanisch durch Betätigung des Kupplungsfußpedals (1a)
und andererseits durch Beaufschlagung über das Magnetventil (12') im ABS-Fall bewegbar sind, derart,
daß bei der manuellen Kupplungsübernahme der Servokolben (112) durch die Fußkraft gegen den Druck der
Druckversorgung (P) rückgeschoben wird mit voller
Pedalrückwirkung und ruckfreier Übernahme. (Fig. 14)

22. Vorrichtung nach einem oder mehreren der Ansprüche
    1-21, dadurch gekennzeichnet, daß zwei unterschiedlich ansprechende elektrische Schalter (125, 16, 16',
    16a) als mechanisch betätigte Wegschalter, hydrau-
    lisch betätigte Druckschalter, durch Kolbenverschie-
    bung betätigte Schalter u. dgl. vorgesehen sind,
    wobei ein erster Schalter (125) bei anfänglichem
    Niedertreten des Kupplungspedals anspricht und ein
    zweiter Schalter (16') bei Erreichen der Endlage
    derart, daß durch elektrische Verknüpfungsglieder
    ab Beginn der Kupplungsbetätigung bis zum Erreichen
    der Endlage eine automatische Auslösung der Kupplung
    (Einkuppeln) gesperrt ist.

23. Vorrichtung nach einem oder mehreren der Ansprüche
    1-22, dadurch gekennzeichnet, daß ein kontinuierlicher Wegsensor (127) vorgesehen und dem Kupplungspedal (1a) oder einer Kolbenverschiebung so zugeordnet ist, daß je nach Position des Kupplungspedals
    bei manueller Betätigung zur ruckfreien Kupplungskraftübernahme dem als Proportionalventil oder taktendes Magnetventil ausgebildeten Magnetventil (12')
    für die Zuführung der Druckversorgung (P) ein Signal zugeführt ist, welches eine allmähliche (verzögerte) Druckbeaufschlagung des Servokolbens (112)
    sicherstellt.

Fig.1

Fig.2

0231465

# Fig.3

P

12

II

(a)   (b)

18   10   4a'   4b'   6'   23   22   20b   17'

20a   7'   22'   9'   14'   1

I

16'

(-)
(+)

1a

3   2   24

3/3

0231465

# Fig.4

4/5

# Fig.5

0231465

Fig.6

# Fig.7

P

12

(+)
(−)

16'

1    1a

II    50"    I    14

42a"    3

43'    46"    40"    2'    42"    41    2a

0231465

# Fig.8

1a  1  12  P

(-)  (+)

I  II  51

$d_2'$  $d_1'$

2a  3

W

16a  43  42  42a  50  40  46

0231465

# Fig.9

P
12

I

64 72 71 64 66 69 65 62b 62c

63 62 62a 70 68 60 2 62d 68a 61 68b 67

# Fig.10

P
12

75 62a 70

63 64 73 74 64 62 68 60 61 67

# Fig.11

# Fig.12

023 1465

# Fig.13

0231465

Fig.14